# EUROPÄISCHE PATENTSCHRIFT

(11) **EP 2 669 143 B1**
(45) Veröffentlichungstag und Bekanntmachung des Hinweises auf die Patenterteilung: **27.04.2016**
(21) Anmeldenummer: 13169366.5
(22) Anmeldetag: 27.05.2013
(51) Int. Cl.: B62B 3/00

(54) **Transportwagen sowie ein Verfahren zur Bewegung eines Transportwagens**
Transport trolley and a method for moving a transport trolley
Wagon de transport et procédé de déplacement d'un wagon de transport

(30) Priorität: 29.05.2012 DE 102012104585
(43) Veröffentlichungstag der Anmeldung: 04.12.2013
(73) Patentinhaber: Blickle Räder + Rollen GmbH & Co.KG, 72348 Rosenfeld (DE)
(72) Erfinder: Schwarz, Michael, 72348 Rosenfeld (DE)
(74) Vertreter: Holzwarth-Rochford, Andreas

(56) Entgegenhaltungen:
- EP-A1- 1 743 828
- EP-A1- 2 418 137
- DE-B- 1 067 475
- GB-A- 820 228
- US-A- 1 545 117
- US-A- 2 582 000

## Beschreibung

Die vorliegende Erfindung betrifft einen Transportwagen, nach dem Oberbegriff des Patentanspruchs 1 sowie ein Verfahren zur Bewegung eines Transportwagens, nach dem Oberbegriff des Patentanspruchs 11.

Aus dem Stand der Technik ist eine Vielzahl von Transportwagen bekannt.

So offenbart die CH 22387 einen Transportkarren. Dabei umfasst der Transportkarren als Tragrollen bezeichnete Bockrollen, die paarweise mittig bezüglich einer Längsachse des Transportkarrens angeordnet sind. Vor und hinter den Bockrollen sind entlang der Längsrichtung des Transportkarrens als Stützrollen bezeichnete frei schwenkbare Lenkrollen angeordnet. Die Richtungsstabilität wird über die Bockrollen im mittleren Bereich sichergestellt.

Damit der Transportkarren jedoch auch bei unebenem Boden stabil bleibt, müssen die Bockrollen bei einem leeren Transportkarren den Boden berühren, während die frei schwenkbaren Lenkrollen in waagerechter Lage des Transportkarrens von dem Untergrund beabstandet sind.

Nachteilig bei diesem Transportkarren ist ferner auch, dass die Manövrierfähigkeit beschränkt ist. Soll der Transportkarren in eine Richtung senkrecht zu seiner Längsrichtung bewegt werden, so ist es notwendig, dass der Transportkarren zunächst um 90° gedreht wird, um dann mit dieser veränderten Ausrichtung entlang seiner Längsrichtung bewegt zu werden. Liegt also ein Zug mehrerer Transportkarren vor, so müssen die einzelnen Transportkarren voneinander entkoppelt und einzeln gedreht werden, um eine entsprechende Bewegung zu ermöglichen. Die Bewegung des gesamten Zuges in einer Richtung senkrecht zur Längsrichtung ist nicht möglich.

Darüber hinaus offenbart die GB 790 031 einen Radsteuerungsmechanismus für einen Kamerawaagen, der einen gattungsgemäßen Transportwagen darstellt. Mittels eines Schaftes werden Räder zwangsgelenkt. Dazu sind die Räder über entsprechende Ketten, um entsprechende Lenkachsen mitnahmesicher drehbar miteinander verbunden. Der Kamerawaagen weist zwei Radpaare auf, wobei die Radpaare jeweils paarweise über miteinander getrennte Kette verschwenkbar sind. Eine Verbindung der Ketten voneinander kann hergestellt bzw. getrennt werden. Dadurch wird ermöglicht, dass ein Radpaar derartig festgelegt wird, dass es als Bockrollenpaar dient, während das andere Radpaar zwangsgelenkt schwenkbar ist. In einer weiteren Konfiguration ist es möglich, dass die Ketten mechanisch miteinander verbunden werden, so dass eine drehmitnahmesichere Lenkung aller Radpaare erfolgt.

Nachteilig bei diesem Transportwagen ist jedoch, dass aufgrund der Vielzahl von Ketten ein komplizierte Aufbau vorhanden ist.

Schließlich offenbart die DE 37 11 662 A1 eine Hebe- und Transportvorrichtung. In einer ersten Konfiguration umfasst die Transportvorrichtung zwei in Längsrichtung der Transportvorrichtung hintereinander angeordnete Lenkrollen, die jeweils Radpaare aufweisen. Bei dieser Konfiguration ist ein Radpaar mittels einer Lenkvorrichtung um eine Lenkachse schwenkbar, während das verbleibende Radpaar nicht direkt mit der Lenkvorrichtung sondern unter Zwischenschaltung einer Verbindungseinrichtung zur wahlweisen Lenkung der Radpaare im gleichen oder entgegengesetzten Drehsinn verbunden ist und schwenkbar gelagert ist.

Nachteilig bei dieser Konfiguration ist jedoch, dass eine ausreichende Kippsicherheit der Transportvorrichtung nicht gewährleistet ist. Darüber hinaus offenbart dieses Dokument eine zweite Konfiguration der Hebe- und Transportvorrichtung, bei welcher zwei Radpaare vorhanden sind, wobei die einzelnen Räder der Radpaare um getrennte Lenkachsen drehbar sind und die Räder beabstandet von einer Längsmittelachse der Transportvorrichtung angeordnet sind. In dieser Konfiguration wird vorgeschlagen, dass alle Räder der Radpaare zwangsgelenkt über insgesamt drei Gliederketten miteinander verbunden sind. Damit weist diese zweite Konfiguration der Transportvorrichtung, die einen gattungsgemäßen Transportwagen darstellt, ebenfalls einen komplizierten Aufbau auf. Schließlich wird allgemein erläutert, ohne dass die genaue Positionierung der Rollen bzw. Rollenpaare spezifiziert wird, dass ein Rad bzw. Radpaar direkt über eine Lenkvorrichtung gelenkt wird, während ein verbleibendes, nicht unmittelbar mit der Lenkvorrichtung lenkbares Rad bzw. Radpaar schwenkbar gelagert ist.

Ferner beschreibt die US 2,582,000 A einen gattungsgemäßen Transportwagen. Bei diesem ist eine Fixiereinrichtung für eine Deichsel vorgesehen.

Es ist daher Aufgabe der vorliegenden Erfindung, den gattungsgemäßen Transportwagen sowie das aus dem Stand der Technik bekannte Verfahren zur Bewegung eines Transportwagens derartig weiterzuentwickeln, dass eine gute Manövriermöglichkeit bei großer Kippsicherheit des Transportwagens sichergestellt wird und gleichzeitig der Transportwagen einen einfachen und damit kostengünstigen Aufbau aufweist.

Die den Transportwagen betreffende Aufgabe wird insbesondere dadurch gelöst, dass die Fixiereinrichtung mit der ersten Verbindungseinrichtung und/oder einer zweiten, entgegen der Hauptfahrrichtung, angeordneten Verbindungseinrichtung des Transportwagens derart in Wirkverbindung steht, dass die erste Verbindungseinrichtung und/oder die zweite Verbindungseinrichtung nur dann in eine die Verbindung mit einem weiteren Transportwagen und/oder Zugwagen ermöglichende Verbindungsposition überführbar ist, wenn die Lenkvorrichtung in der Festellposition angeordnet und/oder fixiert ist, und/oder eine Lösung der Fixiereinrichtung und/oder eine Bewegung der Lenkvorrichtung aus der Feststellposition heraus, nur dann möglich ist, wenn die erste Verbindungseinrichtung und/oder die zweite Verbindungseinrichtung sich außerhalb der Verbindungsposition befindet bzw. befinden.

Dabei ist besonders bevorzugt, dass die erste Verbindungseinrichtung, die ersten Lenkrollen und/oder die zweite Lenkrolle zumindest indirekt mit dem Tragrahmen verbunden ist bzw. sind.

Auch mit der Erfindung vorgeschlagen, dass die zweite Verbindungseinrichtung, zumindest indirekt mit dem Tragrahmen verbunden ist, die erste Verbindungseinrichtung und/oder die zweite Verbindungseinrichtung zumindest eine Deichsel umfasst, die erste Verbindungseinrichtung und/oder die zweite Verbindungeinrichtung zumindest ein Verbindungselement zur Verbindung eines weiteren Transportwagens und/oder eines Zugfahrzeugs umfasst und/oder die erste Verbindungseinrichtung und/oder die zweite Verbindungseinrichtung im wesentlichen entlang der Längsmittelachse angeordnet ist.

Weiterhin liefert die Erfindung einen Transportwagen, der dadurch gekennzeichnet sein kann, dass zumindest eine dritte um eine dritte Rollachse rotierende Lenkrolle bezüglich der Hauptfahrrichtung hinter der erste Querachse, vorzugsweise zumindest indirekt mit dem Tragrahmen verbunden, angeordnet ist, wobei die dritte Lenkrolle zumindest eine um eine dritte Lenkachse schwenkbar gelagerte Lenkrolle ist, insbesondere die dritte Lenkrolle frei schwenkbar um die dritte Lenkachse drehbar gelagert ist.

Auch ist bevorzugt, dass die ersten Lenkachsen, die zweite Lenkachse und/oder die dritte Lenkachse im wesentlichen senkrecht zu einer von dem Tragrahmen aufgespannten Ebene verläuft bzw. verlaufen, die Längsmittelachse in der von dem Tragrahmen aufgespannten Ebene verläuft, die zweite Lenkachse und/oder die dritte Lenkachse entlang der Längsmittelachse angeordnet ist bzw. sind, insbesondere die Längsmittelachse schneiden, und/oder die ersten Lenkachsen windschief zu der Längsmittelachse verlaufen.

Ein erfindungsgemäßer Transportwagen kann ferner gekennzeichnet sein durch zumindest zwei, vorzugsweise eine Vielzahl von, zweiten Lenkrollen und/oder dritten Lenkrollen, wobei zumindest zwei zweite Lenkrollen entlang zumindest einer, vorzugsweise im wesentlichen senkrecht zu der Längsmittelachse verlaufenden, zweiten Querachse und/oder zumindest zwei dritte Lenkrollen entlang zumindest einer, vorzugsweise im wesentlichen senkrecht zu der Längsmittelachse verlaufenden, dritten Querachse angeordnet sind.

Auch ist bevorzugt, dass der Drehsinn der ersten Lenkrollen um die jeweils erste Lenkachse entgegengesetzt ist.

Bei der vorgenannten Ausführungsform ist besonders bevorzugt, dass die Lenkvorrichtung zumindest eine, insbesondere zumindest teilweise getrennt von der ersten Verbindungseinrichtung und/oder der zweiten Verbindungseinrichtung ausgebildete und/oder zumindest teilweise von einer der ersten Lenkrollen umfasste und/oder mit einer der ersten Lenkrollen in direkter Wirkverbindung stehende und/oder zumindest zeitweise unabhängig von der ersten Verbindungseinrichtung und/oder der zweiten Verbindungseinrichtung bewegbare, insbesondere um eine, vorzugsweise im wesentlichen parallel zu den ersten Lenkachsen, der zweiten Lenkachse und/oder der dritten Lenkachse verlaufende Drehachse drehbare, Handhabungsvorrichtung umfasst, wobei die Drehachse vorzugsweise einer der ersten Lenkachsen entspricht.

Bei den beiden vorgenannten Ausführungsformen wird vorgeschlagen, dass die Lenkvorrichtung zumindest ein mit der Handhabungsvorrichtung einerseits und dem ersten Lenkrollenpaar und/oder den ersten Lenkrollen andererseits in Wirkverbindung stehendes Lenkglied umfasst, wobei ferner zumindest ein Spannelement für das Lenkglied, zumindest ein in zumindest einem Kreuzungsbereich des Lenkgliedes angeordnetes Kreuzungselement, zumindest ein Justierelement, und/oder zumindest eine Umlenkeinrichtung für das Lenkglied von der Lenkvorrichtung umfasst ist bzw. sind.

Weiterhin kann bei der vorgenannten Ausführungsform vorgesehen sein, dass das Lenkglied zumindest eine Kette, zumindest einen Riemen, zumindest ein Seil, zumindest einen Draht, zumindest ein Stahlseil, zumindest ein Zahnradgetriebe, zumindest eine Übertragungswelle und/oder zumindest ein Gestänge, insbesondere Lenkgestänge, umfasst.

Für die beiden vorgenannten Ausführungsformen schlägt die Erfindung vor, dass die Umlenkeinrichtung zumindest ein Umlenkrad, zumindest eine Umlenkrolle und/oder zumindest ein Umlenkgetriebe umfasst.

Weiterhin wird hierzu ergänzend oder alternativ vorgeschlagen, dass mittels des Justierelements eine relative Drehposition der Handhabungsvorrichtung um die Drehachse einerseits und der Schwenkposition einer ersten Lenkrolle um die erste Lenkachse andererseits und/oder einer ersten ersten Lenkrolle um ihre erste Lenkachse einerseits und einer zweiten ersten Lenkrolle um ihre zweite Lenkachse andererseits veränderbar ist.

Weiterhin kann ein erfindungsgemäßer Transportwagen gemäß den vorgenannten Ausführungsformen dadurch gekennzeichnet sein, dass mittels des Spannelements eine Länge des Lenkgliedes, wie eines Kettensegments und/oder Riemensegments, insbesondere zwischen der Handhabungsvorrichtung und einer der ersten Lenkrollen und/oder zwischen zwei ersten Lenkrollen veränderbar und/oder einstellbar ist und/oder das Justierelement und das Spannelement zumindest bereichsweise in einem ausgebildet sind.

Auch wird mit der Erfindung vorgeschlagen, dass die Handhabungsvorrichtung mittels der Fixiereinrichtung in zumindest einer Drehposition um die Drehachse und/oder die ersten Lenkrollen in zumindest einer Schwenkposition um die ersten Lenkachsen fixierbar ist bzw. sind, wobei vorzugsweise zwei Feststellpositionen, Schwenkpositionen und/oder Drehpositionen vorgesehen sind, insbesondere die zwei Feststellpositionen und/oder Drehpositionen zwei um 180° um die ersten Lenkachsen versetzt angeordnete Schwenkpositionen entsprechen.

Bei der vorgenannten Ausführungsform ist besonders bevorzugt, dass in der Feststellposition, der Schwenkposition und/oder der Drehposition die ersten Lenkrollen in einer einer solchen Lenkposition um die jeweilige erste Lenkachse angeordnet sind, dass eine Bewegung des Transportwagens in Richtung der Längsmittelachse und/oder Hauptfahrrichtung, insbesondere in Vorwärtsrichtung oder in Rückwärtsrichtung des Transportwagens, ermöglicht ist, vorzugsweise die ersten Rollachsen parallel zu der ersten Querachse, die ersten Rollachsen parallel parallel zueinander und/oder die ersten Rollachsen senkrecht zu der Längsmittelachse ausgerichtet sind.

Bei den beiden vorgenannten Ausführungsformen ist besonders bevorzugt, dass die Fixiereinrichtung mit dem ersten Lenkrollenpaar, den ersten Lenkrollen, dem Lenkglied, dem Spannelement, der Umlenkeinrichtung, dem Justierelement und/oder dem Kreuzungselement in Wirkverbindung steht, in der Feststellposition die Handhabungsvorrichtung in der Drehposition angeordnet und/oder fixiert ist und/oder bei Lösung der Fixiereinrichtung die Handhabungsvorrichtung aus der Drehposition und/oder der ersten Lenkrollen aus der Schwenkposition heraus bewegbar ist.

Weiterhin wird mit der Erfindung vorgeschlagen, dass die Fixiereinrichtung zumindest ein mit dem ersten Lenkrollenpaar, einer der ersten Lenkrollen, dem Lenkglied, dem Spannelement, der Umlenkeinrichtung, dem Justierelement, der Handhabungsvorrichtung und/oder dem Kreuzungselement in Wirkverbindung stehendes erstes Fixierelement und/oder zumindest ein mit der ersten Verbindungseinrichtung und/oder der zweiten Verbindungseinrichtung und/oder zumindest einer Betätigungseinrichtung der Fixiereinrichtung in Wirkverbindung stehendes zweites Fixierelement umfasst, wobei insbesondere eine Bewegung der ersten Verbindungseinrichtung, der zweiten Verbindungseinrichtung und/oder der Betätigungseinrichtung auf das zweite Fixierelement übertragbar ist.

Dabei ist besonders bevorzugt, dass die Betätigungseinrichtung von der Handhabungsvorrichtung zumindest bereichsweise umfasst und/oder an dieser zumindest bereichsweise angeordnet ist.

Ein erfindungsgemäßer Transportwagen kann dadurch gekennzeichnet sein, dass das zweite Fixierelement direkt, mitnahmesicher, drehmitnahmesicher und/oder mittels zumindest einer Übertragungseinrichtung, vorzugsweise umfassend zumindest ein Gestänge, zumindest ein Getriebe und/oder zumindest einen Bowdenzug, mit der ersten Verbindungseinrichtung, der zweiten Verbindungseinrichtung und/oder der Betätigungseinrichtung verbunden ist und/oder das zweite Fixierelement in der Feststellposition der Lenkvorrichtung, der Drehposition der Handhabungsvorrichtung, der Schwenkposition einer der ersten Lenkrollen und/oder der Verbindungsposition der ersten Verbindungseinrichtung und/oder der zweiten Verbindungseinrichtung in Eingriff mit dem zweiten Fixierelement gelangt.

Weiterhin schlägt die Erfindung vor, dass die Lenkvorrichtung zumindest ein Getriebe zur Übertragung einer Bewegung der Handhabungsvorrichtung, insbesondere einer Drehbewegung der Handhabungsvorrichtung um die Drehachse, auf die ersten Lenkrollen, insbesondere zur Drehung der ersten Lenkrollen um die erste Lenkachse umfasst, wobei das Übersetzungsverhältnis des Getriebes veränderbar ist, insbesondere in Abhängigkeit von einem Umfang der Drehbewegung um die Drehachse, wobei vorzugsweise für eine Bewegung der Handhabe aus der Drehposition eine Untersetzung vorliegt.

Auch wird mit der Erfindung vorgeschlagen, dass die erste Rollachse der ersten Lenkrolle im wesentlichen senkrecht zu der ersten Lenkachse verläuft, die zweite Rollachse der zweiten Lenkrolle im wesentlichen senkrecht zu der zweiten Lenkachse verläuft und/oder die dritte Rollachse der dritten Lenkrolle im wesentlichen senkrecht zu der dritten Lenkachse verläuft, die erste Lenkrolle, die zweite Lenkrolle und/oder die dritte Lenkrolle zumindest eine Kompensationseinrichtung umfasst bzw. umfassen und/oder die erste Lenkrolle, die zweite Lenkrolle und/oder die dritte Lenkrolle zumindest zwei, vorzugsweise eine Mehrzahl von Rollenrädern, die insbesondere mittels zumindest einem Lenkgehäuse und/oder zumindest einer Rollengabel getragen sind, wobei das Lenkgehäuse und/oder die Rollengabel um die erste Lenkachse, die zweite Lenkachse und/oder die dritte Lenkachse drehbar gelagert ist bzw. sind, umfasst bzw. umfassen.

Bei der vorgenannten Ausführungsform ist besonders bevorzugt, dass die erste Lenkrolle, die zweite Lenkrolle und/oder die dritte Lenkrolle keine Ausladung und/oder keinen Nachlauf aufweist bzw. aufweisen und/oder die erste Lenkachse und die erste Rollachse, die zweite Lenkachse und die zweite Rollachse und/oder die dritte Lenkachse und die dritte Rollachse sich schneiden.

Alternativ kann hierzu vorgesehen sein, dass die erste Lenkrolle, die zweite Lenkrolle und/oder die dritte Lenkrolle eine Ausladung und/oder einen Nachlauf aufweist und/oder die erste Rollachse windschief zu der ersten Lenkachse, die zweite Rollachse windschief zu der zweiten Lenkachse und/oder die dritte Rollachse windschief zu der dritten Lenkachse verläuft.

Schließlich kann ein erfindungsgemäßer Transportwagen dadurch gekennzeichnet sein, dass der Transportwagen als Hubwagen, Anhänger, Trailer und/oder Schubwagen ausgebildet ist.

Weiterhin liefert die Erfindung einen Zug umfassend eine Vielzahl von, insbesondere mittels jeweils der ersten Verbindungseinrichtung und/oder der jeweils zweiten Verbindungseinrichtung eines vorangehenden oder nachfolgenden Transportwagens, miteinander verbundenen erfindungsgemäßen Transportwagen.

Die das Verfahren betreffende Aufgabe wird dadurch gelöst, dass bei einer fehlenden Fixierung der Lenkvorrichtung mittels der Fixiereinrichtung, eine Überführung einer in eine Hauptfahrrichtung des Transportwagens angeordneten ersten Verbindungseinrichtung und/oder zumindest einer entgegen der Hauptfahrrichtung angeordneten zweiten Verbindungseinrichtung in zumindest eine Verbindung mit einem weiteren Transportwagen und/oder Zugwagen ermöglichende Verbindungsposition verhindert wird und/oder eine Lösung der Fixiereinrichtung und/oder eine Bewegung der Lenkvorrichtung aus zumindest einer Feststell-position heraus, nur dann möglich ist, wenn die erste Verbindungseinrichtung und/oder die zweite Verbindungseinrichtung sich außerhalb der Verbindungsposition befindet bzw. befinden.

Dabei ist besonders bevorzugt, dass durch Aufbau der Schub- und/oder Zugkraft zumindest eine dritte um eine dritte Rollachse rotierende Lenkrolle, die bezüglich der Hauptfahrrichtung hinter der Querachse angeordnet ist, um eine dritte Lenkachse geschwenkt wird, insbesondere derart, dass die zweite Rollachse und/oder die dritte Rollachse parallel zu der Längsmittelachse und/oder parallel zu der ersten Rollachse ausgerichtet wird bzw. werden.

Mit der Erfindung wird für das Verfahren auch vorgeschlagen, dass die ersten Lenkrollen mittels der Lenkvorrichtung drehmitnahmesicher verschwenkt werden, insbesondere in einem entgegengesetzten Drehsinn.

Auch ist bevorzugt, dass zum Betätigen der Fixiereinrichtung die erste Verbindungseinrichtung und/oder die zweite Verbindungseinrichtung aus der Verbindungsposition heraus bewegt wird bzw. werden.

Ein erfindungsgemäßes Verfahren kann dadurch gekennzeichnet, dass die Lenkvorrichtung bei einer Fixierung in der Feststellposition fixiert wird, insbesondere die Handhabungsvorrichtung in zumindest einer Drehposition und/oder die ersten Lenkrollen in zumindest einer Schwenkposition fixiert wird bzw. werden.

Bei der vorgenannten Ausführungsformen ist besonders bevorzugt, dass in der Feststellposition, der Drehposition und/oder der Schwenkposition die ersten Lenkrollen in einer Lenkposition derart fixiert werden, dass die ersten Rollachsen parallel zu der ersten Querachse, die ersten Rollachsen parallel zueinander und/oder die ersten Rollachsen senkrecht zu der Längsmittelachse ausgerichtet werden.

Weiterhin schlägt die Erfindung für das Verfahren vor, dass wenn die Lenkvorrichtung sich außerhalb der Festellposition, sich die Handhabungsvorrichtung außerhalb der Drehposition und/oder die ersten Lenkrollen außerhalb der Schwenkposition befindet bzw. befinden, eine Überführung der ersten Verbindungseinrichtung und/oder der zweiten Verbindungseinrichtung in die Verbindungsposition verhindert wird und/oder eine Lösung der Handhabungsvorrichtung aus der Drehposition und/oder der ersten Lenkrollen aus der Schwenkposition heraus, nur dann möglich ist, wenn die erste Verbindungseinrichtung und/oder die zweite Verbindungseinrichtung sich außerhalb der Verbindungsposition befindet bzw. befinden.

Schließlich wird für das erfindungsgemäße Verfahren vorgeschlagen, dass zur Lösung der Fixierung eine Verbindung zwischen zumindest einem mit der Lenkvorrichtung, der Handhabungsvorrichtung, dem ersten Lenkrollenpaar und/oder einem der ersten Lenkrollen in Wirkverbindung stehenden ersten Fixierelements einerseits und zumindest einem mit der ersten Verbindungseinrichtung und/oder der zweiten Verbindungseinrichtung und/oder zumindest einer Betätigungseinrichtung der Fixiereinrichtung in Wirkverbindung stehenden zweiten Fixierelement andererseits gelöst wird, wobei insbesondere eine Bewegung der ersten Verbindungseinrichtung, der zweiten Verbindungseinrichtung und/oder der Betätigungseinrichtung an das zweite Fixierelement übertragen wird.

Darüber hinaus liefert die Erfindung ein Zubehörkit zur Herstellung eines Transportwagens, insbesondere eines erfindungsgemäßen Transportwagens, umfassend zumindest eine erste Verbindungseinrichtung, zumindest einen Tragrahmen, zumindest ein erstes Lenkrollenpaar, zumindest eine erste Lenkrolle, zumindest eine zweite Lenkrolle, zumindest eine zweite Verbindungseinrichtung, zumindest eines dritte Lenkrolle, zumindest eine Lenkvorrichtung, zumindest eine Handhabungsvorrichtung, zumindest ein Lenkglied, zumindest eine Kreuzungselement, zumindest ein Justierelement, zumindest eine Umlenkeinrichtung, zumindest ein Spannelement, zumindest eines Fixiereinrichtung, zumindest ein erstes Fixierelement, zumindest ein zweites Fixierelement, zumindest eine Betätigungseinrichtung und/oder zumindest eine Übertragungseinrichtung eines erfindungsgemäßen Transportwagens.

Schließlich wird mit der Erfindung auch ein in einem beliebigen Transportwagen und/oder Verfahren zur Bewegung eines Transportwagens, also einem Transportwagen und/oder einem Verfahren, die nicht zwangsläufig die zuvor beschriebenen Merkmale aufweisen, verwendbare Lenkvorrichtung beansprucht. Diese kann jedoch in dem erfindungsgemäßen Transportwagen und/oder erfindungsgemäßen Verfahren verwendet werden.

Gemäß diesem Aspekt liefert die Erfindung eine Lenkvorrichtung, insbesondere zum Einsatz in einem Transportwagen und/oder umfasst von einem Transportwagen, vorzugsweise einem erfindungsgemäßen Transportwagen, umfassend zumindest ein Lenkglied zur drehmitnahmesicheren Verbindung zumindest zweier zwangsgelenkter Lenkrollen, insbesondere erster Lenkrollen eines erfindungsgemäßen Transportwagens, wobei das Lenkglied kreuzungsfrei geführt ist und eine gegensinnige Schwenkbewegung der zwangsgelenkten Lenkrollen dadurch sichergestellt ist, dass das Lenkglied an einer ersten zwangsgelenkten Lenkrolle auf einer Seite angreift, die einer zweiten zwangsgelenkten Lenkrolle zugewandt ist, während des Lenkglied an der zweiten zwangsgelenkten Lenkrolle auf einer der ersten zwangsgelenkten Lenkrolle abgewandten Seite angreift.

Dabei ist bevorzugt, dass die Lenkvorrichtung zumindest zwei paarweise auf gegenüberliegenden Seiten der ersten zwangsgelenkten Lenkrolle angeordnete Umlenkeinrichtungen, insbesondere Umlenkräder und/oder Umlenkrollen umfasst, wobei das Lenkglied insbesondere jeweils an einer der zweiten zwangsgelenkten Lenkrolle abgewandten Seite an den Umlenkeinrichtungen angreift.

Der Erfindung liegt somit die überraschende Erkenntnis zugrunde, dass durch die Bereitstellung eines ersten Lenkrollenpaares, dass derartig an einem Tragrahmen eines Transportwagens angeordnet wird, dass die ersten Lenkrollen des ersten Lenkrollenpaares entlang einer Querachse angeordnet sind, die senkrecht zu einer Längsmittelachse des Transportwagens verläuft, wobei die ersten Lenkrollen zwangsgelenkt miteinander verbunden sind, und darüber hinaus eine zweite Lenkrolle vorgesehen ist, die jedoch im Gegensatz zu dem ersten Lenkrollenpaar frei schwenkbar ist, eine hohe Manövriermöglichkeit des Transportwagens sichergestellt werden kann und gleichzeitig ein einfacher Aufbau des Transportwagens sowie eine hohe Kippstabilität sichergestellt werden kann.

Dabei ist besonders bevorzugt, dass die Lenkrollen des Transportwagens in einer Diagonalanordnung angeordnet sind, das heißt, dass die ersten Lenkrollen beabstandet von der Längsmittelachse entlang einer Querachse angeordnet sind, während eine erste Lenkrolle, die frei schwenkbar gelagert ist, vor der Querachse angeordnet ist und eine optionale dritte Lenkrolle hinter der Querachse angeordnet ist. Insbesondere bei Verzicht auf die dritte Lenkrolle können auch mehrere zweite Lenkrollen, die paarweise symmetrisch zur Längsmittelachse angeordnet sein können, vorgesehen sein.

Bei Anordnung der zweiten Lenkrolle entlang der Längsmittelachse und Anordnung der dritte, optionalen Lenkrolle entlang der Längsmittelachse des Transportwagens wird eine hohe Kippstabilität des Transportwagens bei gleichzeitig einfachem Aufbau realisiert. Die Ausführung der ersten Lenkrollen als zwangsgelenkte Lenkrollen ermöglicht es, dass diese mittels einer Fixiereinrichtung in einer vorbestimmten Schwenkposition festgelegt werden können und somit, zumindest zeitweise, als Bockrollen wirken.

Im Gegensatz zu den aus dem Stand der Technik bekannten Transportwagen ist es jedoch nicht notwendig, dass die zweite Lenkrollen und die dritte Lenkrolle so angeordnet werden, dass bei einer waagerechten Position des Transportwagens einen Abstand von einem Untergrund haben müssen, um eine Manövrierfähigkeit des Transportwagens sicherzustellen, insbesondere wenn Lenkrollen mit einer Kompensationseinrichtung eingesetzt werden. Aufgrund dieses Bodenkontakts aller Lenkrollen weist der Transportwagen eine höhere Stabilität auf. Auch wird eine Schlackerbewegung der zweiten Lenkrolle oder dritten Lenkrolle aufgrund eines zu geringen Anpressdrucks verhindert.

Ist also eine Geradeausfahrt des Transportwagens, insbesondere in einem Zug, bei welchem der Transportwagen mit weiteren Transportwagen und/oder einer Zugmachine verbunden ist, gewünscht, so können die ersten Lenkrollen mittels der Fixiereinrichtung in der vorbestimmten Schwenkposition festgelegt werden.

Ist es jedoch erwünscht, dass der Transportwagen in eine Querrichtung, insbesondere in eine Richtung senkrecht zur Längsmittelachse des Transportwagen bewegt wird, beispielweise nach einem Abkoppeln des Transportwagens von einem weiteren Transportwagen oder einem Zugfahrzeug, kann die Fixiereinrichtung gelöst werden und so eine Verschwenkung der ersten Lenkrollen um die ersten Lenkachsen durchgeführt werden. Auch ist eine Querfahrt des gesamten Zuges möglich. Dazu werden die Fixiereinrichtungen aller Transportwagen des Zuges gelöst und die Verschwenkung der ersten Lenkrollen durchgeführt.

Erfindungsgemäß erfolgt die Verschwenkung der ersten Lenkrollen dabei zwangsgelenkt. Dies bedeutet, dass ein Benutzer die Lenkposition der ersten Lenkachsen mittels einer zusätzlichen Einrichtung, insbesondere einer Handhabungsvorrichtung, in eine gewünschte Position verstellen kann. Bevorzugt ist dabei, dass die ersten Lenkrollen über eine Lenkvorrichtung drehmitnahmesicher miteinander verbunden sind. Somit kann der Transportwagen nach einem Abkoppeln oder ein gesamter Zug eine Querfahrt von 90° zur Hauptfahrrichtung bzw. Längsmittelrichtung ausführen, ohne dass die Orientierung des Transportwagens, insbesondere der Längsmittelachse bzw. des gesamten Zuges, verändert werden muss. Dazu werden die ersten Lenkrollen aus der Schwenkposition, in der sie im Wesentlichen als Bockrollen bei einer Geradeausfahrt oder Kurvenfahrt im Zug fungieren, ausgelenkt, wobei die ersten Lenkrollen über die Lenkvorrichtung, insbesondere eine Kettenlenkung, drehbar miteinander gekoppelt sind.

Wird nach einer Drehung der ersten Lenkrollen aus der Schwenkposition dann eine Schub- bzw. Zugkraft auf den Transportwagen und/oder Zug, insbesondere in die Querrichtung ausgeübt, richtet sich die frei schwenkbar gelagerte zweite Lenkrolle sowie die optionale, ebenfalls frei schwenkbar gelagerte, dritte Lenkrolle, in die Querrichtung aus, so dass eine Querfahrt bei größtmöglicher Kippsicherheit ermöglicht wird.

Insbesondere aus Sicherheitsgründen sollte jedoch sichergestellt sein, dass die zwangsgelenkten ersten Lenkrollen bei einem Fahren in einem Verbund bzw. an einer Zugmaschine in der Schwenkposition gehalten werden, also als Bockrollen dienen. Dazu ist erfindungsgemäß vorgesehen, dass die Lenkvorrichtung, mittels der die ersten Lenkrollen zwangsgelenkt bewegt werden können, eine mit einer Verbindungseinrichtung wechselwirkende Fixiereinrichtung umfasst.

Mittels dieser Fixiereinrichtung wird eine Feststellung der ersten Lenkrollen in der Schwenkposition erreicht. Dabei kann die Fixiereinrichtung auf unterschiedliche Weise realisiert sein, insbesondere an unterschiedliche Elemente der Lenkvorrichtung angreifen bzw. eine Bewegbarkeit dieser Elemente verhindern. Es ist beispielsweise vorstellbar, dass eine Umlenkeinrichtung für ein Lenkungsglied, wie eine Kette, mit der Fixiereinrichtung verstellbar ist.

So kann eine entsprechende Umlenkeinrichtung beispielsweise als Zahnrad ausgebildet sein, über das das Lenkungsglied bzw. die Lenkkette geführt wird. Dabei kann die Umlenkeinrichtung beispielsweise mit einer Steuerscheibe verbunden sein, die ein erstes Fixierelement darstellt. Durch ein zweites Fixierelement der Fixiereinrichtung ist es möglich, die Steuerscheibe in einer Position festzulegen, die der Schwenkposition der ersten Lenkrollen entspricht.

Dadurch, dass die Umlenkeinrichtung drehmitnahmesicher mit den ersten Lenkrollen über das Lenkungsglied verbunden ist, wird so eine Bewegung des Lenkungsgliedes und damit der ersten Lenkrollen verhindert. Gleichzeitig wird auch verhindert, dass eine Handhabungsvorrichtung, mittels der die ersten Lenkrollen um die ersten Lenkachsen verschwenkt werden können, festgelegt wird, und zwar in einer Drehposition, die der Schwenkposition der ersten Lenkrollen entspricht.

Besonders bevorzugt ist, dass das zweite Fixierelement mit einer Verbindungseinrichtung des Transportwagens in Wirkverbindung steht. Es kann beispielsweise eine erste Verbindungseinrichtung, die in einer Hauptfahrrichtung des Transportwagens vorne angeordnet ist und/oder eine zweite Verbindungseinrichtung, die gegen die Hauptfahrrichtung, also in eine rückwärtige Richtung, des Transportwagens angeordnet ist, vorgesehen sein. Diese Verbindungseinrichtung kann beispielsweise als eine herunterklappbare Deichsel ausgebildet sein. Wird nun an der Deichsel das zweite Fixierelement angeordnet, so kann durch entsprechende Anordnung des ersten Fixierelements erreicht werden, dass das zweite Fixierelement in das erste Fixierelement eingreift, wenn die Verbindungseinrichtung, insbesondere die Deichsel, in eine Verbindungsposition überführt wird. Unter einer Verbindungsposition wird verstanden, dass die Verbindungseinrichtung sich dann in einer Position befindet, die es ermöglicht, die Transportwagen mit einem weiteren Transportwagen oder einem Zugwagen zu verbinden.

Das zweite Fixierelement ist dabei insbesondere so ausgebildet, dass eine Festlegung desselben durch das erste Fixierelement nur in einer Position möglich ist, in der sich die ersten Lenkrollen in der Schwenkposition, die Handhabungsvorrichtung in der Drehposition bzw. die Lenkvorrichtung in der Feststellposition befindet. Dadurch wird also eine sicherheitsrelevante Funktion über die Stellung der Verbindungseinrichtung, insbesondere der Deichsel, gesteuert.

Befindet die Verbindungseinrichtung in einer Verbindungsposition, also beispielsweise die Deichsel in einer heruntergeklappten oder unteren Position, insbesondere in der sie an einem Zufahrzeug angehängt ist, so sind sowohl die ersten Lenkrollen als auch eine Handhabungsvorrichtung fixiert. Durch den Einbau bzw. die Verbindung des ersten Fixierelements mit der Lenkungseinrichtung, insbesondere einem Kettenstrang, blockiert die Verbindungseinrichtung damit über die Fixiereinrichtung eine Bewegung der ersten Lenkrollen.

Die zuvor beschriebene Handhabungsvorrichtung kann an jedem beliegen Punkt der Lenkungseinrichtung in deren Bewegung eingreifen. So kann die Handhabungsvorrichtung direkt mit zumindest einer der ersten Lenkrollen verbunden sein oder mit einer weiteren Lenkvorrichtung, beispielsweise einer Umlenkeinrichtung oder einem Lenkglied, verbunden sein. Bei Verbindung der Verbindungseinrichtung mit einem weiteren Element der Lenkvorrichtung ergibt sich der Vorteil, dass die Handhabungsvorrichtung im Wesentlichen an einem beliebigen Punkt des Transportwagens angeordnet werden kann, um so eine von der Positionierung der ersten Lenkrollen unabhängige Positionierung der Handhabungsvorrichtung erreichen zu können.

Auch die Handhabungsvorrichtung selber kann ein erstes Fixierelement darstellen oder direkt mit dem ersten Fixierelement verbunden sein. So kann durch eine direkte Fixierung der Handhabungsvorrichtung eine Bewegung der ersten Lenkrollen um die erste Lenkachse verhindert werden. Auch kann vorgesehen sein, dass das zweite Fixierelement unabhängig von einer Verbindungseinrichtung angesteuert wird. So kann beispielsweise vorgesehen sein, dass eine getrennte Betätigungseinrichtung, die vorzugsweise im Bereich der Handhabungsvorrichtung angeordnet ist bzw. von dieser zumindest teilweise umfasst ist, zur Betätigung des zweiten Fixierelements vorgesehen ist. Insbesondere in dem Fall, in dem das erste Fixierelement ebenfalls von der Handhabungsvorrichtung umfasst ist, kann somit ein sehr kompakter Aufbau erreicht werden. So kann die Lenkvorrichtung in einer Feststellposition fixiert werden, insbesondere in einer solchen Position, dass sich die ersten Lenkrollen in der Schwenkposition befinden. So wird über die Betätigungseinrichtung das zweite Fixierelement in Eingriff mit dem ersten Fixierelement gebracht und so die Handhabungsvorrichtung in der Drehposition festgelegt und damit die ersten Lenkrollen in der Schwenkposition.

Besonders bevorzugt ist, dass eine automatische Verbindung zwischen dem ersten Fixierelement und dem zweiten Fixierelement erfolgt, wenn sich die ersten Lenkrollen in ihrer Schwenkposition befinden bzw. sich die Lenkvorrichtung in der Feststellposition bzw. die Handhabungsvorrichtung in der Drehposition befindet.

Bei Aufbau einer Wirkverbindung zwischen der Verbindungseinrichtung und der Fixiereinrichtung, insbesondere dem zweiten Fixierelement, kann durch entsprechende Ausgestaltung des ersten bzw. zweiten Fixierelements ferner erreicht werden, dass die Verbindungseinrichtung nur dann in die Verbindungsposition überführt werden kann, wenn sich das erste Fixierelement und das zweite Fixierelement im Eingriff befindet, also die Lenkvorrichtung mittels der Fixiereinrichtung in der Feststellposition befindet.

Die Anordnung der Handhabungsvorrichtung an einer von der ersten Lenkachse beanstandeten Position bietet den Vorteil, dass der für eine Bewegung der Handhabungsvorrichtung notwendige Bewegungsbereich, insbesondere eine Ausladung, so gering wie möglich ausgestaltet werden kann, also die Handhabungsvorrichtung so wenig wie möglich behindert. Hingegen bietet die Anordnung der Handhabungsvorrichtung an der ersten Lenkachse bzw. ersten Lenkrolle den Vorteil, dass bei einem Einschlag, insbesondere einer Querfahrt, eine Schub- bzw. Zugkraft direkt über die Handhabungsvorrichtung eingeleitet werden kann. Eine zusätzliche Einbringung einer weiteren Schub- bzw. Zugkraft an einer anderen Position ist dann nicht mehr notwendig. So wird bei der Anordnung der Handhabungsvorrichtung an einer ersten Lenkrolle sichergestellt, dass immer eine Kraftrichtung auf die erste Lenkrolle vorhanden ist, die durch einen Drehmittelpunkt derselben geht und somit einen maximalen Kraftanteil zu der gewünschten Bewegung beträgt.

In einer bevorzugten Ausführungsform kann vorgesehen, dass die Lenkvorrichtung zumindest ein Getriebe zur Übertragung einer Bewegung der Handhabungsvorrichtung auf die ersten Lenkrollen umfasst. So kann das Getriebe insbesondere sicherstellen, dass die Schwenkposition der ersten Lenkrollen mit größtmöglicher Präzision eingestellt werden können, also ein verlässliche Geradeausfahrt des Transportwagens sichergestellt werden kann. Um Toleranzen bei der Positionierung der Handhabungsvorrichtung in der Drehposition zu vermeiden kann vorgesehen sein, dass das Getriebe in diesem Bewegungsbereich der Vorrichtung eine Untersetzung der Drehbewegung der Handhabungsvorrichtung auf eine Verschwenkung der ersten Lenkrollen sicherstellt. Dadurch wird sichergestellt, dass ein leichter Versatz der Handhabungsvorrichtung aus der Drehposition nur zu einem geringen Verschwenken der ersten Lenkrollen aus der gewünschten Schwenkposition führt.

Besonders bevorzugt ist, dass die ersten Lenkrollen keine Ausladung bzw. keinen Nachlauf aufweisen, also die ersten Lenkachse und die erste Rollachse sich schneiden. Hingegen ist es für die frei schwenkbaren zweiten und dritten Lenkrollen bevorzugt, dass diese ein entsprechendes Ausladen bzw. Nachlauf aufweisen, also die jeweiligen zweite bzw. dritte Rollachse zwar senkrecht auf der zweiten bzw. dritte Lenkachse steht, jedoch windschief zueinander ausgerichtet sind. Dadurch wird sichergestellt, dass sich die zweite und dritte Lenkrolle verlässlich in jeweiligen Bewegungsrichtungen des Transportwagens aufgrund ihrer freien Schwenkbarkeit bewegen und, solange keine Richtungsänderung des Transportwagens vorgenommen wird, sich in dieser Position verbleiben.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1a: eine Aufsicht auf eine Unterseite eines Transportwagens gemäß einer ersten Ausführungsform;
- Figur 1b: eine perspektivische Seitenansicht des Transportwagens der Figur 1a;
- Figur 2a: eine Aufsicht auf eine Unterseite eines Transportwagens gemäß einer zweiten Ausführungsform;
- Figur 2b: eine perspektivische Seitenansicht des Transportwagens der Figur 2a;
- Figur 3a: eine Aufsicht auf eine Unterseite eines Transportwagens gemäß einer dritten Ausführungsform;
- Figur 3b: eine perspektivische Seitenansicht des Transportwagens der Figur 3a;
- Figur 4a: eine Aufsicht auf eine Unterseite eines erfindungsgemäßen Transportwagens gemäß einer vierten Ausführungsform;
- Figur 4b: eine perspektivische Ansicht auf den Transportwagen der Figur 4a in einer ersten Position einer Verbindungeinrichtung und Handhabungsvorrichtung;
- Figur 4c: eine perspektivische Ansicht auf den Transportwagen der Figur 4a in einer zweiten Position der Verbindungseinrichtung und der Handhabungsvorrichtung;
- Figur 4d: eine perspektivische Ansicht auf den Transportwagen der Figur 4a in einer dritten Position der Verbindungseinrichtung und der Handhabungsvorrichtung;
- Figur 4e: eine Ansicht auf den Transportwagen der Figur 4a in einer vierten Position der Verbindungseinrichtung und der Handhabungsvorrichtung:
- Figur 5: eine schematische Aufsicht auf eine Unterseite eines Transportwagens gemäß einer fünften Ausführungsform in verschiedenen Positionen i) bis iv) eines Manövrierweges des Transportwagens;
- Figur 6: eine Aufsicht auf eine Unterseite eines Transportwagens gemäß einer sechsten Ausführungsform;
- Figur 7: eine Aufsicht auf eine Unterseite eines erfindungsgemäßen Transportwagens gemäß einer siebten Ausführungsform;
- Figur 8: eine perspektivische Aufsicht auf eine Unterseite eines Transportwagens gemäß einer achten Ausführungsform;
- Figur 9a: eine perspektivische Aufsicht auf einen Transportwagens gemäß einer neunten Ausführungsform; und
- Figur 9b: eine Aufsicht auf eine Unterseite des Transportwagens der Figur 9a.

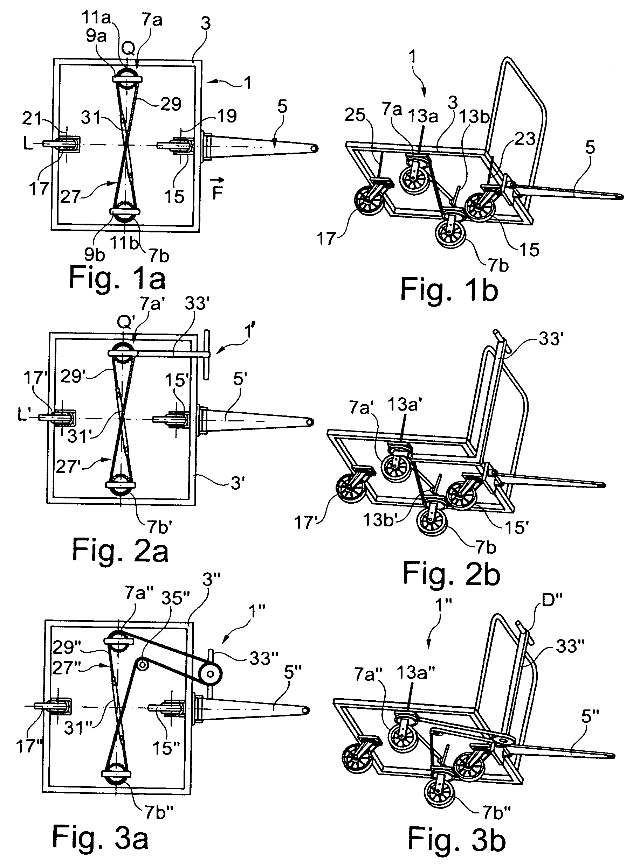

Figur 1 a ist eine Aufsicht auf eine Unterseite eines Transportwagens 1 gemäß einer ersten Ausführungsform dargestellt. Figur 1b zeigt eine perspektivische Aufsicht auf den Transportwagen 1.

Der Transportwagen 1 umfasst einen Tragrahmen 3 sowie eine in einer Hauptfahrrichtung F nach vorne angeordnete erste Verbindungeinrichtung in Form einer Deichsel 5. Die Deichsel 5 ermöglicht es, den Transportwagen 1 mit einer nicht dargestellten Zugmaschine oder einem nicht dargestellten weiteren Transportwagen zu verbinden, insbesondere zur Ausbildung eines erfindungsgemäßen Zuges.

Der Transportwagen 1 weist ein erstes Lenkrollenpaar, das durch erste Lenkrollen 7a und 7b gebildet, auf. Entsprechende Rollräder 9a, 9b der Lenkrollen 7a, 7b können um erste Rollachsen 11a beziehungsweise 11b rotieren. Darüber hinaus sind die ersten Lenkrollen 7a, 7b gemäß der Erfindung zwangsgelenkt, um entsprechende erste Lenkachsen 13a, 13b gelagert.

Dabei sind die ersten Lenkrollen 11a, 11b entlang einer Querachse Q, die senkrecht zu einer Längsmittelachse L des Transportwagens 1 verläuft, angeordnet und zwar derart, dass sie auf den gegenüberliegenden Seiten der Längsmittelachse angeordnet sind.

Der Transportwagen 1 weist ferner eine zweite Lenkrolle 15 und eine dritte Lenkrolle 17 auf. Dabei ist die zweite Lenkrolle 15 bezüglich der Hauptfahrrichtung F vor der Querachse Q also in Vorwärtsrichtung angeordnet während die dritte Lenkrolle 15 bezüglich der Hauptfahrrichtung F hinter der Querachse Q also in Rückwärtsrichtung angeordnet. Das Rollenrad der Lenkrollen 15 ist rotierbar um eine zweite Rollachse 19 während das Rollenrad der dritten Lenkrolle 17 um eine Rollachse 21 rotierbar ist. Ferner ist die zweite Lenkrolle 15 erfindungsgemäß frei schwenkbar um eine zweite Lenkachse 23, während die dritte Lenkrolle 17 um eine dritte Lenkachse 25 frei schwenkbar gelagert ist.

Die ersten Lenkrollen 7a, 7b sind über eine Lenkvorrichtung 27 mitnahmesicher miteinander verbunden, wobei die Lenkrollen 7a und 7b sich gegensinnig drehen. Dies bietet, wie später ausführlich erläutert werden wird, den Vorteil, dass der Transportwagen durch eine Schwenkung der Lenkrollen 7a, 7b nicht nur eine Geradeausfahrt in eine Richtung senkrecht zu der Längsmittelachse L ausführen kann, sondern auch die Orientierung der Längsmittelachse L im Raum verändert werden kann, insbesondere der Transportwagen 1 gedreht werden kann.

Die Lenkvorrichtung 27 umfasst ein Lenkglied in Form einer Kette 29, wobei innerhalb der Kette 29 ein Kreuzungselement 31 angeordnet ist. Das Kreuzungselement 31 erfüllt darüber hinaus auch die Funktion eines Spannelementes, da die Länge des Kreuzungselementes 31 und damit der Kette 29 verändert werden kann.

Darüber hinaus verfüllt das Kreuzungselement 31 auch die Funktion eines Justierelementes, da die Position des Kreuzungselementes 31 innerhalb der Kette veränderbar ist. So weist das Kreuzungselement 31 Gewindeelemente auf, die es ermöglichen den Abstand der Kreuzungselementenden zu den Enden der Kette 29 zu verändern.

In den Figuren 2a und 2b ist eine zweite Ausführungsform eines Transportwagens 1' dargestellt. Diejenigen Elemente, die funktional denjenigen des Transportwagens 1 entsprechen, tragen die gleichen Bezugszeichen allerdings einfach gestrichen. Im Gegensatz zum Transportwagen 1 umfasst der Transportwagen 1' eine von der Lenkvorrichtung 27' umfasste Handhabungsvorrichtung in Form eines Betätigungshebels 33'.

Der Betätigungshebel 33' greift derartig an die erste Lenkrolle 7a' an, dass er um eine Drehachse drehbar ist, die identisch mit der ersten Lenkachse 13a' ist. Mittels einer Drehung des Betätigungshebels 33' lassen sich die ersten Lenkrollen 7a' und 7b' um die entsprechenden Lenkachsen 13a', 13b' gegensinnig verschwenken. Insbesondere führt eine Bewegung des Betätigungshebels 33' aus der in den Figuren 2a und 2b dargestellten Drehposition, in der die ersten Lenkrollen 7a', 7b' in einer als Schwenkposition bezeichneten Position ausgerichtet sind, dazu, dass eine Bewegung des Transportwagen 1' in eine Richtung senkrecht zu der Längsmittelachse L', insbesondere entlang der Querachse Q', ermöglicht wird. Dies wir nachfolgende ausführlicher erläutert.

In der in den Figuren 2a und 2b dargestellten Drehposition des Betätigungshebels 33' beziehungsweise der Schwenkposition der ersten Lenkrollen 7a', 7b' wirken die ersten Lenkrollen 7a', 7b' als Bockrollen und ermöglichen eine richtungsstabile Bewegung des Transportwagens 1' in eine Richtung entlang der Längsmittelachse L'.

In den Figuren 3a und 3b ist eine dritte Ausführungsform eines Transportwagens 1" dargestellt. Die Elemente des Transportwagens 1 " die funktional denjenigen des Transportwagens 1 entsprechen, tragen die gleichen Bezugszeichen, allerdings zweifach gestrichen. Die Lenkvorrichtung 27" des Transportwagens 1" weist ebenfalls eine Handhabungsvorrichtung in Form eines Betätigungshebels 33" auf. Im Gegensatz zu dem Betätigungshebel 33' ist der Betätigungshebel 33" jedoch derartig angeordnet, dass eine Drehachse D" des Betätigungshebels 33" zwar parallel zu der Lenkachse 13a" verläuft, jedoch nicht mit dieser zusammenfällt.

Insbesondere bietet sich diese Anordnung des Betätigungshebels 33" bei solchen Transportwagen an, die eine vergleichsweise lange Ausdehnung entlang der Längsmittelachse im Vergleich zu einer Richtung senkrecht zu der Längsmittelachse aufweisen. So wird der Ausschwenkbereich bzw. die Ausladung des Betätigungshebels 33' vergleichsweise groß, so dass auch der für die Drehung notwendige Freiraum neben dem Transportwagen 1' vorhanden sein muss, um ein Schwenken des Betätigungshebels 33' um die Drehachse 13a' zu ermöglichen. Darüber hinaus umfasst die Lenkvorrichtung 27" eine Umlenkeinrichtung für die Kette 29" in Form eines Umlenkrades 35".

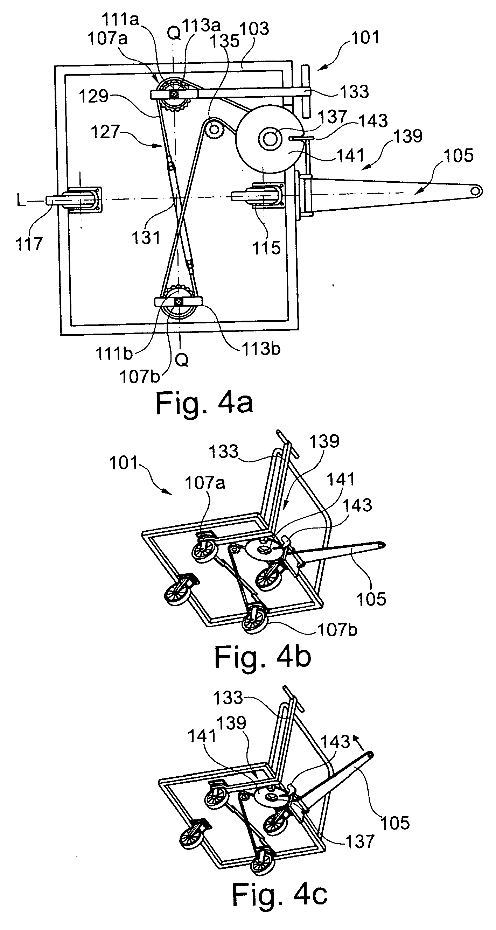

In den Figuren 4a bis 4e ist eine vierte Aufführungsform eines erfindungsgemäßen Transportwagens 101 dargestellt. Diejenigen Elemente, die denjenigen Elementen des Transportwagens 1, 1' beziehungsweise 1" funktional entsprechen, tragen die gleichen Bezugszeichen, allerdings um den Faktor 100 erhöht beziehungsweise ohne die entsprechenden Strichungen.

Der Aufbau des Transportwagens 101 ist mit dem Aufbau des Transportwagens 1 " vergleichbar. Allerdings umfasst der Transportwagen 101, insbesondere die Lenkvorrichtung 127 neben dem Umlenkrad 135 eine weitere Umlenkeinrichtung in Form eines Umlenkrades 137. Das Umlenkrad 137 ist ferner erfindungsgemäß mit einem ersten Fixierelement einer Fixiereinrichtung 139 verbunden. Das erste Fixierelement ist in Form einer Steuerscheibe 141 ausgebildet.

Neben der Steuerscheibe 141 umfasst die Fixiereinrichtung 139 ein zweites Fixierelement 143. Das zweite Fixierelement ist in Form eines drehmitnahmesicher mit der Deichsel 105 verbundenen Hebels 143 ausgebildet.

In den Figuren 4a und 4b ist der Transportwagen 101 in einer Konfiguration dargestellt, in der sich die Deichsel 105 in einer Verbindungsposition befindet. Insbesondere ist die Deichsel 105 heruntergeklappt und ermöglicht die Ankopplung des Transportwagens 101 an einen weiteren Transportwagen beziehungsweise ein Zugfahrzeug.

Um bei einer Bewegung des Transportwagens 101 eine ausreichende Richtungsstabilität zu erzielen, bewirkt die Fixiereinrichtung 139, dass die ersten Lenkrollen 107a, 107b im wesentlichen als Bockrollen wirken. Dazu sind die Lenkrollen 107a, 107b in der Lenkposition, in der die Rollachsen 111a, 111b im wesentlichen parallel zu der Querachse verlaufen, insbesondere mit der Querachse zusammenfallen beziehungsweise senkrecht zu der Längsmittelachse L verlaufen, ausgerichtet. Diese Lenkposition wird als die Schwenkposition bezeichnet.

Die Lenkvorrichtung 127 befindet sich in der sogenannten Feststellposition und der Bedienhebel 133 befindet sich in einer als die Drehposition bezeichneten Position. Auf Grund der Tatsache, dass der Hebel 143 Eingriff in die Steuerscheibe 141 hat und insbesondere eine Rotation der Steuerscheibe 141 und damit des Umlenkrades 137 verhindert wird, ist auch eine Bewegung der Kette 129 und damit eine Bewegung der Lenkrollen 107a, 107b aus der Schwenkposition nicht möglich.

Wird jedoch die Deichsel 105 aus der Verbindungsposition herausbewegt, insbesondere hochgeklappt, wie es in Figur 4c dargestellt ist, wird der Eingriff des Hebels 143 in die Steuerscheibe 141 gelöst. Dadurch wird eine Drehung der Steuerscheibe 141 und damit des mit der Steuerscheibe 141 verbundenen Umlenkrades 137 möglich.

Somit ist die Bewegung der Kette 129 und damit der Lenkvorrichtung 127 freigegeben. Dies ermöglicht es insbesondere, dass der Bedienhebel 133 aus der Drehposition um seine Drehachse gedreht werden kann und damit die Lenkrollen 107a und 107b, die über die Kette 129 zwangsgelenkt miteinander verbunden sind, aus der Schwenkposition heraus verschwenkt werden können. Eine derartige Bewegung des Bedienhebels 133 ist in Figur 4b dargestellt.

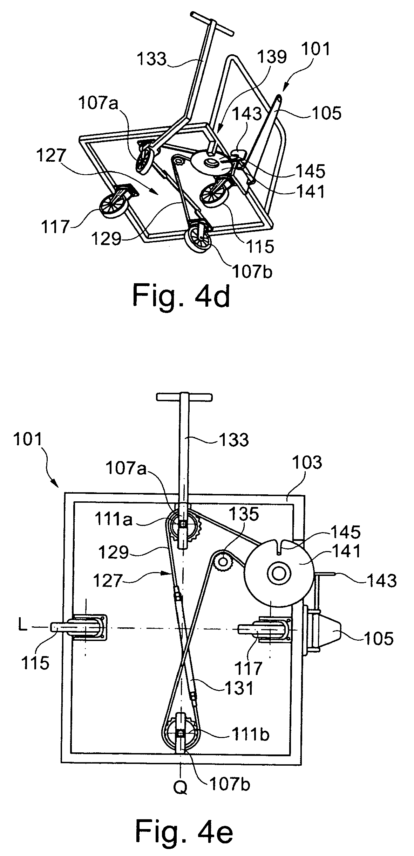

Wie sich aus einem Vergleich der Figur 4d mit den Figuren 4a, 4b und 4c ergibt, führt die Bewegung des Betätigungshebels 133 um die Drehachse herum dazu, dass die Drehbewegung direkt auf die erste Lenkrolle 107a und dann über die Kette 129 auf die erste Lenkrolle 107b übertragen wird. Darüber hinaus kommt es zu einer Drehung der Steuerscheibe 141 insbesondere derart, dass ein in der Steuerscheibe 141 angeordneter Schlitz 145, in dem der Hebel 143, wie in den Figuren 4a und 4b dargestellt, Eingriff finden kann, seine Position verändert. Dies bewirkt gleichzeitig, dass beim Zurückschwenken der Deichsel 105 diese nicht in die Verbindungsposition überführt werden kann und so wirksam die Ankopplung des Transportwagens 101 mittels der Deichsel 105 verhindert wird, solange sich die ersten Lenkrollen 107a, 107b außerhalb der Schwenkposition befinden.

Bei einer weiteren Betätigung des Betätigungshebels 133 wird diese schließlich in der Figur 4e dargestellte Position gedreht. In dieser Position sind die ersten Lenkrollen 107a, 107b derart geschwenkt, dass die Rollachsen 111a, 111b senkrecht zu der Querachse Q beziehungsweise parallel zu der Längsmittelachse L ausgerichtet sind. Somit wird eine Bewegung des Transportwagens 101 in eine Richtung senkrecht zu der Längsmittelachse L beziehungsweise entlang der Querachse Q, also eine Querbewegung ermöglicht. Dadurch wird ein Rotieren des Transportwagens 101 vereinfacht. Wie insbesondere Figur entnehmen ist, ist der Schlitz 145 der Steuerscheibe 141 ebenfalls um 90° aus der in Figur 4a dargestellten Position gedreht, so dass ein Zurückschwenken der Deichsel 105 in die Verbindungsposition dadurch verhindert wird, dass der Hebel 143 nicht in den Schlitz 145 eintreten kann.

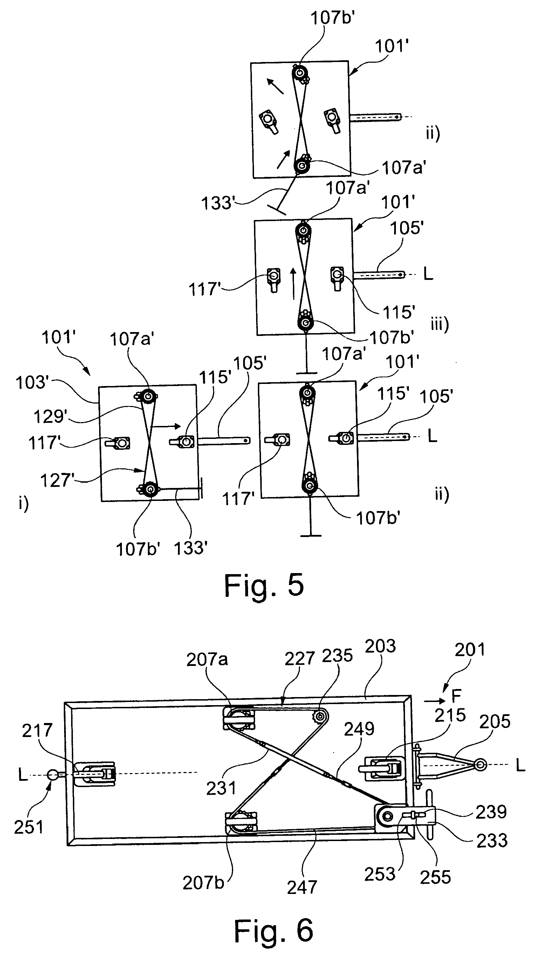

In Figur 5 ist ein Transportwagen 101' gemäß einer fünften Ausführungsform in verschiedenen Positionen i) bis iv) dargestellt. Diejenigen Elemente des Transportwagens 101', die funktional denjenigen des Transportwagens 101 entsprechen, tragen die gleichen Bezugszeichen, allerdings einfach gestrichen.

In der Position i) der Figur 5 befindet sich der Transsportwagen 101' in einem Zugverbund. Die Deichsel 105' befindet sich in einer Verbindungsposition und über eine nicht dargestellte Fixiereinrichtung werden die ersten Lenkrollen 107a', 107b' in der Schwenkposition gehalten. Analog wird der Betätigungshebel 133' in der Drehposition gehalten.

Der Zug in der sich der Transportwagen 101' befindet, wird dann in der Position ii) der Figur 5 angehalten und der Transportwagen 101' wird abgekoppelt. Anschließend wird die Deichsel 105' aus der Verbindungsposition herausgeführt und so die Fixierung mittels der Fixiereinrichtung aufgelöst. Dies ermöglicht es, dass der Bedienhebel 133' in die in der Position ii) dargestellte Konstellation überführt werden kann, wodurch die ersten Lenkrollen 107a', 107b' verschwenkt werden. Dabei werden die Rollachsen der ersten Lenkrollen 107a', 107b' analog, wie für den Transportwagen 101 in Figur 4e dargestellt, verschwenkt.

Ohne den Aufbau einer Schub- beziehungsweise Zugkraft verbleiben die zweite Lenkrolle 115' und die dritte Lenkrolle 117' in der in Position ii) dargestellten Ausrichtung. Wird hingegen eine Schubkraft senkrecht zu der Längsmittelachse L des Transportwagens 101' aufgebaut, kommt es zu einer Bewegung des Transportwagens 101' in die Position iii) der Figur 5. Wie zu erkennen ist, führt die freie Schwenkbarkeit der zweiten Lenkrolle 115' und der dritten Lenkrolle 117' dazu, dass die Rollachsen derselben sich parallel zu den Rollachsen der ersten Lenkrollen 107a' und 107b' ausrichten. Somit wird eine Querfahrt des Transportwagens 101' ermöglicht.

Um eine abschließende Positionierung des Transportwagens 101' in der Position iv) der Figur 5 zu ermöglichen kann der Betätigungshebel 133' beliebig gedreht werden. Diese Drehbewegung wird direkt auf die erste Lenkrolle 107a' und über die Lenkvorrichtung 127' auf die weitere erste Lenkrolle 107b' übertragen.

Dabei erfolgt jedoch die Verschwenkung der ersten Lenkrollen 107a' und 107b' gegensinnig. Dadurch wird erreicht, dass die Rollachsen der ersten Lenkrollen 107a' und 107b' nicht mehr parallel ausgerichtet sind. Dies führt dazu, dass der Transportwagen 101' eine Drehbewegung ausführen kann also die Ausrichtung der Längsmittelachse L im Raum geändert werden kann. Die Bewegung des Transportwagens 101' ist also nicht auf eine Geradeausfahrt entlang der Längsmittelachse oder senkrecht zu der Längsmittelachse beziehungsweise in einem beliebigen Winkel zu der Längsmittelachse beschränkt.

Die Lenkrollen 107a' und 107b' können also so verschwenkt werden, dass die Längsmittelachse im Raum gedreht wird. Dies ermöglicht eine vorteilhafte Manövrierfähigkeit des Transportwagens 101'.

In Figur 6 ist eine sechste Ausführungsform eines Transportwagens in Form des Transportwagens 201 dargestellt. Der Aufbau des Transportwagens 201 ist grundsätzlich mit dem Aufbau des in den Figuren 3a und 3b dargestellten Transportwagens 1" vergleichbar, so dass Elemente, die funktional denjenigen des Transportwagens 1" entsprechen, in dem Transportwagen 201 die gleichen Bezugszeichen tragen, allerdings ungestrichen und um den Faktor 200 erhöht.

In dem Transportwagen 201 umfasst die Lenkvorrichtung 227 neben dem Kreuzungselement 231, Justier- und Spannelemente 247 und 249. Mittels der Justierelemente ist es möglich, die relative Drehposition zwischen dem Betätigungshebel 233 und der ersten Lenkrolle 207a mittels des auch als Spannelement wirkenden Elements 249 zu verändern beziehungsweise mittels des Spannelements 247 eine relative Drehposition zwischen dem Bedienhebel 233 und der ersten Lenkrolle 207b.

Im Gegensatz zu den zuvor dargestellten Transportwagen weist der Transportwagen 201 eine starre erste Verbindungseinrichtung in Form der Deichsel 205 auf. Darüber hinaus ist in Figur 6 die Anordnung einer zweiten Verbindungseinrichtung in Form eines Koppelelementes 251 dargestellt. Das Koppelelement 251 ist in einer Rückwärtsrichtung der Hauptfahrrichtung F des Transportwagens 201 angeordnet und ermöglicht das Ankoppeln eines weiteren Transportwagens an den Transportwagen 201. Auch das Koppelement 251 ist starr ausgebildet.

Um dennoch eine Fixierung der Lenkvorrichtung 227 zu erreichen ist der Betätigungshebel 233 mittels eines Stiftes 253 der Eingriff in eine nicht dargestellte Öffnung des Tragrahmens 203 nimmt in seiner Drehrichtung fixierbar. Mittels einer nicht dargestellten Betätigungseinrichtung, die insbesondere von der Handhabungsvorrichtung also dem Betätigungshebel 233 zumindest teilweise umfasst ist, kann dieser Stift, der ein zweites Fixierelement darstellt, in beziehungsweise aus Eingriff mit dem Betätigungshebel 233 gebracht werden. Es ist so möglich die Drehbewegung des Betätigungshebels 233 in seiner Drehposition festzulegen und damit die ersten Lenkrollen 207a, 207b in ihrer Schwenkposition über die Fixierung der Lenkvorrichtung in der Fixierposition festzulegen.

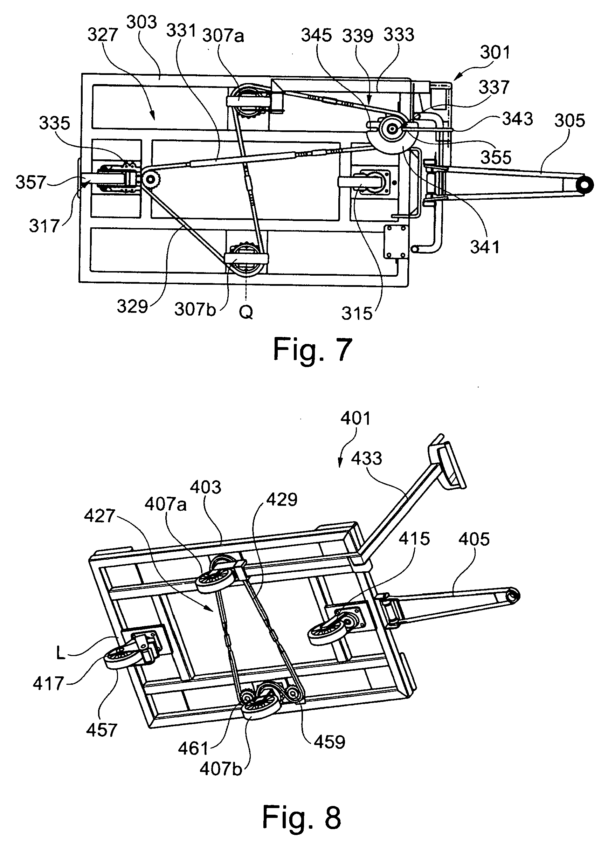

In Figur 7 ist eine weitere, zweite Abwandlung eines erfindungsgemäßen Transportwagens in Form eines Transportwagens 301 dargestellt. Da der Aufbau des Transportwagens mit demjenigen des Transportwagens 101 vergleichbar ist, tragen die Elemente des Transportwagens 301, die funktional denjenigen des Transportwagens 101 entsprechen, die gleichen Bezugszeichen, allerdings um den Faktor 200 erhöht. Im Gegensatz zu dem Transportwagen 101 wird bei dem Transportwagen 301 eine abgewandelte Fixiereinrichtung 339, insbesondere eine abgewandelte Steuerscheibe 341, eingesetzt. Die Steuerscheibe 341 weist zwei Schlitze 345 und 355 auf. Die Schlitze 345 und 355 sind um 180° versetzt angeordnet.

Da die Drehbewegung des Betätigungshebels 333 1:1 auf die ersten Lenkrollen 307a und 307b übertragen wird, ermöglicht die Fixiereinrichtung daher, dass die Lenkvorrichtung 327 in zwei Schwenkposition der Lenkrollen 307a, 307b fixiert werden kann. Die beiden Schwenkpositionen unterscheiden sich durch eine Verschwenkung der Lenkrollen 307a und 307b um jeweils 180°.

Dies bietet den Vorteil, dass der Betätigungshebel 333 zwei Drehpositionen aufweist, also Positionen, in denen er mit der Fixiereinrichtung 339 fixierbar ist. Dies ermöglicht es, dass der Bedienhebel 333 bei einer Geradeausfahrt entweder im vorderen Bereich des Transportwagens 301 angeordnet werden kann oder in dem hinteren Bereich des Transportwagens 301, je nachdem wie es die Platzverhältnisse zulassen.

In beiden Drehpositionen ist eine Fixierung des Betätigungshebels 333 vorhanden, so dass die Lenkrollen 307a und 307b als Bockrollen fungieren und so bei einer Geradausfahrt eine größtmöglichste Richtungsstabilität bereitgestellt wird.

Im Gegensatz zu dem zuvor dargestellten Transportwagen unterscheiden sich darüber hinaus auch die zweite Lenkrolle 315 und die dritte Lenkrolle 317. Die Lenkrolle 317 weist im Gegensatz zur Lenkrolle 315 eine Kompensationseinrichtung auf. Dies bedeutet, dass das Rollenrad 357 federnd entlang der Lenkachse der Lenkrolle 317 gelagert ist. Dadurch wird sichergestellt, dass sowohl die zweite Lenkrolle 315 als auch die dritte Lenkrolle 317 stets Kontakt mit einem Untergrund haben. Es ist bevorzugt, dass ein Transportwagen so tariert ist, dass der Schwerpunkt zum vorderen Ende des Transportwagens verschoben ist. So ist auf Grund dieser Schwerpunktlage stets sichergestellt, dass die vordere Lenkrolle, also hier die zweite Lenkrolle 315, in Kontakt mit dem Boden steht. Um bei einer Geradeausfahrt ein Schwingen der dritten Lenkrolle 317 zu vermeiden, ist der Kompensator vorgesehen um die dritte Lenkrolle spurtreu zu halten. Die Schwerpunktverschiebung kann durch das Gewicht der Deichsel 305 oder einer Anordnung der Quersachse Q in der hinteren Hälfte des Transportwagens entlang der Längsmittelachse erreicht werden.

In Figur 8 ist eine achte Ausführungsform eines Transportwagens in Form eines Transportwagens 401 dargestellt. Diejenigen Elemente des Transportwagens 401 die funktional denjenigen des Transportwagens 301 entsprechen, tragen die gleichen Bezugszeichen, allerdings um den Faktor 100 erhöht.

Im Gegensatz zu dem Transportwagen 301 ist bei dem Transportwagen 401 die Lenkvorrichtung 427 insbesondere so realisiert, dass das Lenkglied in Form der Kette 429 kreuzungsfrei geführt wird. Gleichzeitig wird jedoch die gegensinnige Verschwenkung der ersten Lenkrollen 407a und 407b sichergestellt. Dies wird insbesondere dadurch erreicht, dass die Kette 427 an der Lenkrolle 407a an der der Lenkrolle 407b abgewandten Seite angreift, während die Kette 429 an der ersten Lenkrolle 407b auf der der Lenkrolle 407a zugewandten Seite angreift.

Dieser Verlauf der Kette 429 im Bereich der Lenkrolle 407b wird insbesondere durch den Einsatz zweiter Umlenkräder 459 und 461 realisiert. An diesen wird die Kette 429 an den jeweils der Lenkrolle 407a abgewandten Seite geführt. Da die Umlenkrollen 459 und 461 jedoch so angeordnet sind, dass die Rotationsachse der Umlenkräder 459 und 461 im gleichen Abstand zu der Längsmittelachse L des Transportwagens 401, wie die Lenkachse der Lenkrollen 407b beabstandet sind, wird der Angriff der Kette 429 an der Lenkrolle 407b auf der der Lenkrolle 407a zugewandten Seite sichergestellt.

Der kreuzungsfreie Verlauf der Kette 429 bietet insbesondere im Vergleich zu dem Transportwagen 301 den Vorteil, dass ein Zwischenraum zwischen der Kette 429 bzw. der Lenkvorrichtung 427 und jeweils der zweiten Lenkrolle 415 und der dritten Lenkrolle 417 gebildet wird. Dies ermöglicht es beispielsweise, dass zwei Gabeln eines Gabelstaplers unter den Rahmen 403 des Transportwagens 401 gefahren werden können, um diesen anzuheben. Eine Kollision mit der Kette 429 bzw. Lenkvorrichtung 427 kann dabei wirksam verhindert werden.

Der in dem Transportwagen 401 realisierte Aufbau der Lenkvorrichtung 427 bietet den Vorteil, dass vergleichsweise kleine Umlenkräder eingesetzt werden können und so der für die Lenkvorrichtung 427 notwendige Bauraum begrenzt werden kann. So könnte eine kreuzungsfreie Führung des Lenkgliedes unter gleichzeitiger gegensinniger Drehung bzw. Verschwenkung der Lenkrollen auch dadurch erreicht werden, dass das Lenkglied über ein Umlenkrad eines Zahnradgetriebes geführt wird, wobei die Drehbewegung über das Zahnradgetriebe an ein Ritzel der ersten Lenkrolle übertragen wird. Um jedoch eine gleichmäßige Drehung der ersten Lenkrollen sicherzustellen, muss eine Unter- bzw.-Übersetzung verhindert werden und so ist der Einsatz von Zahnrädern, die den gleichen Durchmesser wie das Ritzel der Lenkrolle aufweisen, notwendig ist. Dies führt jedoch zu einem erhöhten Platzbedarf.

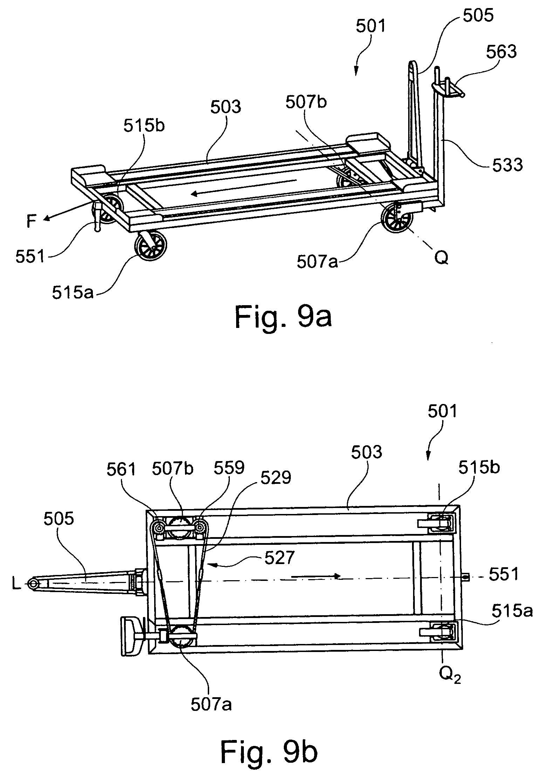

In den Figuren 9a und 9b ist schließlich eine neunte Ausführungsform eines Transportwagen in Form eines Transportwagens 501 dargestellt. Der Transportwagen 501 weist einen Tragrahmen 503 auf.

Darüber hinaus umfasst der Transportwagen 501 eine in Hauptfahrrichtung F vorne an dem Tragrahmen 503 angeordnete erste Verbindungseinrichtung in Form eines Koppelelements 551. Ein in Hauptfahrrichtung (F) rückwärtig angeordnetes zweites Verbindungselement wird durch eine Deichsel 505 realisiert. Bei dem Transportwagen 501 ist daher die Fixiereinrichtung derartig ausgebildet, dass sie mit der zweiten Verbindungseinrichtung wechselwirkt und so einen Betätigungshebel 533 in der Drehposition bzw. erste Lenkrollen 507a und 507b in der Schwenkposition festlegt.

Im Gegensatz zu den zuvor angeführten Transportwagen weist der Transportwagen 501 zwei zweite Lenkrollen 515a und 515b auf. Somit umfasst der Transportwagen 501 entlang einer zweiten Querachse Q₂ zwei frei schwenkbare gelagerte zweite Lenkrollen 515a, 515b neben den zwei zwangsgelenkten Lenkrollen 507a, 507b. Auf den Einsatz einer dritten Lenkrolle kann in dem Transportwagen 501 verzichtet werden.

Dies ermöglicht es insbesondere, dass der Betätigungshebel 533 direkt an der ersten Lenkrolle 507a angreifen kann, jedoch aufgrund des geringen Abstandes der Querachse Q von einem hinteren Ende des Tragrahmens 503 einen geringen Bewegungsbereich zur Überführung der ersten Lenkrollen 507a, 507b aus der Schwenkposition in eine eine Querfahrt erlaubende Position benötigt.

Bei dem Transportwagen 501 umfasst die Fixiereinrichtung ferner eine Betätigungseinrichtung 563, die an dem Betätigungshebel 533 angeordnet ist.

Wie insbesondere der Figur 9b zu entnehmen ist, ist die Lenkvorrichtung 527 ähnlich der Lenkvorrichtung 427 des Transportwagens 401 ausgebildet, insbesondere ist die Führung der Kette 529 mit der Führung der Kette 429 vergleichbar. So wird die Kette 529 so geführt, dass sie an der ersten Lenkrolle 507a auf der der Lenkrolle 507b abgewandten Seite vorbeigeführt wird bzw. dort angreift, während sie an der Lenkrolle 507b auf der der Lenkrolle 507a zugewandten Seite geführt ist bzw. dort angreift. Somit wird ein gegensinniges Verschwenken der Lenkrollen 507a, 507b erreicht, ohne dass eine Kreuzung der Kette 529 notwendig ist, wobei der für die Lenkvorrichtung 527 notwendige Bauraum ebenfalls gering gehalten ist, so dass der Bereich unterhalb des Tragrahmens 503 im Wesentlichen frei von Einbauten ist. So kann der Transportwagen 501 auch problemlos von einem Gabelstapler angehoben werden kann, ohne das die Kollision mit unterhalb des Tragrahmens 503 angeordneten Anbauten befürchtet werden muss.

Die anhand der Transportwagen 401 und 501 beschrieben Lenkvorrichtungen 427 und 429, insbesondere die dort beschriebene kreuzungsfreie Führung des Lenkgliedes bei gleichzeitiger Sicherstellung einer gegensinnigen Drehung der Lenkrollen, kann unabhängig von den weiteren Aspekten der beschriebenen Transportwagen realisiert werden, insbesondere behält sich der Anmelder das Recht vor, eine Teilanmeldung auf diese Lenkvorrichtung bzw. die darin enthaltene Aspekte zu richten.

Die in der vorstehenden Beschreibung, in den Ansprüchen und in den Figuren dargestellten Merkmale können sowohl einzeln als auch in beliebiger Kombination wesentlich für die Erfindung in ihren verschiedenen Ausführungsformen sein.

### Bezugszeichenliste

- 1: Transportwagen
- 3: Tragrahmen
- 5: Deichsel
- 7a, 7b: Lenkrolle
- 9a, 9b: Rollenrad
- 11a, 11b: Rollachse
- 13a, 13b: Lenkachse
- 15: Lenkrolle
- 17: Lenkrolle
- 19: Rollachse
- 21: Rollachse
- 23: Lenkachse
- 25: Lenkachse
- 27: Lenkvorrichtung
- 29: Kette
- 31: Kreuzungselement

- 1': Transportwagen
- 3': Tragrahmen
- 5': Deichsel
- 7a', 7b': Lenkrolle
- 13a', 13b': Lenkachse
- 15': Lenkrolle
- 17': Lenkrolle
- 27': Lenkvorrichtung
- 29': Kette
- 31': Kreuzungselement
- 33': Betätigungshebel
- 1": Transportwagen
- 3": Tragrahmen
- 5": Deichsel
- 7a", 7b": Lenkrolle
- 13a, 13b: Lenkachse
- 15": Lenkrolle
- 17": Lenkrolle
- 27": Lenkvorrichtung
- 29": Kette
- 31": Kreuzungselement
- 33": Betätigungshebel
- 35": Umlenkrad

- 101: Transportwagen
- 103: Tragrahmen
- 105: Deichsel
- 107a, 107b: Lenkrolle
- 111a, 111b: Rollachse
- 113a, 113b: Lenkachse
- 115: Lenkrolle
- 117: Lenkrolle
- 127: Lenkvorrichtung
- 129: Kette
- 131: Kreuzungselement
- 133: Betätigungshebel
- 135: Umlenkrad
- 137: Umlenkrad
- 139: Fixiereinrichtung
- 141: Steuerscheibe
- 143: Hebel
- 145: Schlitz

- 101': Transportwagen
- 103': Tragrahmen
- 105': Deichsel
- 107a', 107b': Lenkrolle
- 115': Lenkrolle
- 117': Lenkrolle
- 127': Lenkvorrichtung
- 129': Kette
- 133': Betätigungshebel

- 201: Transportwagen
- 203: Tragrahmen
- 205: Deichsel
- 207a, 207b: Lenkrolle
- 215: Lenkrolle
- 217: Lenkrolle
- 227: Lenkvorrichtung
- 229: Kette
- 231: Kreuzungselement
- 233: Betätigungshebel
- 235: Umlenkrad
- 247: Justierlement
- 249: Spannelement
- 251: Koppelelement
- 253: Stift

- 301: Transportwagen
- 303: Tragrahmen
- 305: Deichsel
- 307a, 307b: Lenkrolle
- 315: Lenkrolle
- 317: Lenkrolle
- 327: Lenkvorrichtung
- 329: Kette
- 331: Kreuzungselement
- 333: Betätigungshebel
- 335: Umlenkrad
- 337: Umlenkrad
- 339: Fixiereinrichtung
- 341: Steuerscheibe
- 343: Hebel
- 345: Schlitz
- 355: Schlitz
- 357: Rollenrad

- 401: Transportwagen
- 403: Tragrahmen
- 405: Deichsel
- 407a, 407b: Lenkrolle
- 415: Lenkrolle
- 417: Lenkrolle
- 427: Lenkvorrichtung
- 429: Kette
- 433: Betätigungshebel
- 457: Rollenrad
- 459: Umlenkrad
- 461: Umlenkrad

- 501: Transportwagen
- 503: Tragrahmen
- 505: Deichsel
- 507a, 507b: Lenkrolle
- 515a, 515b: Lenkrolle
- 527: Lenkvorrichtung
- 529: Kette
- 533: Betätigungshebel
- 551: Koppelelement
- 559: Umlenkrad
- 561: Umlenkrad
- 563: Betätigungeinrichtung

- F: Hauptfahrrichtung
- L, L': Längsmittelachse
- Q, Q', Q2: Querachse
- D": Drehachse

## Patentansprüche

1. Transportwagen (1, 1', 1", 101, 101', 201, 301, 401, 501), umfassend zumindest einen Tragrahmen (3), zumindest eine in eine Hauptfahrrichtung (F) des Transportwagens (1) angeordnete erste Verbindungseinrichtung (5) zur Verbindung mit einem weiteren Transportwagen und/oder einer Zugmaschine, zumindest ein erstes Lenkrollenpaar (7a, 7b), wobei zumindest zwei um jeweils eine erste Rollachse (11a, 11b) rotierende Lenkrollen des ersten Lenkrollenpaares (7a, 7b) entlang einer im wesentlichen senkrecht zu einer Längsmittelachse (L) des Tragrahmens (5) verlaufenden ersten Querachse (Q) auf gegenüberliegenden Seiten der Längsmittelachse (L) angeordnet sind und zumindest eine zweite Lenkrolle (15), die bezüglich der Hauptfahrrichtung (F) vor der ersten Querachse (Q) angeordnet ist, wobei die zweite Lenkrolle (15) zumindest eine um eine zweite Rollachse (19) rotierende Lenkrolle (15) ist, und die ersten Lenkrollen (7a, 7b) des ersten Lenkrollenpaares als um jeweils eine erste Lenkachse (13a, 13b) zwangsgelenkt schwenkbare Lenkrollen (7a, 7b) und die zweite Lenkrolle (15) als eine um eine zweite Lenkachse (23) frei schwenkbar gelagerte Lenkrolle (15) ausgebildet sind, wobei zumindest eine die ersten Lenkrollen des ersten Lenkrollenpaares drehmitnahmesicher verschwenkbar miteinander verbindende Lenkvorrichtung (127, 327) zumindest eine Fixiereinrichtung (139, 339) umfasst, mittels der die Lenkvorrichtung (127, 327) in zumindest einer Feststellposition fixierbar ist, **dadurch gekennzeichnet, dass**
die Fixiereinrichtung (139) mit der ersten Verbindungseinrichtung (105) und/oder einer zweiten, entgegen der Hauptfahrrichtung (F), angeordneten Verbindungseinrichtung des Transportwagens derart in Wirkverbindung steht, dass die erste Verbindungseinrichtung (105) und/oder die zweite Verbindungseinrichtung nur dann in eine die Verbindung mit einem weiteren Transportwagen und/oder Zugwagen ermöglichende Verbindungsposition überführbar ist, wenn die Lenkvorrichtung (127) in der Feststellposition angeordnet und/oder fixiert ist, und/oder eine Lösung der Fixiereinrichtung (139) und/oder eine Bewegung der Lenkvorrichtung (127) aus der Feststellposition heraus, nur dann möglich ist, wenn die erste Verbindungseinrichtung (105) und/oder die zweite Verbindungseinrichtung sich außerhalb der Verbindungsposition befindet bzw. befinden.

2. Transportwagen nach Anspruch 1, **dadurch gekennzeichnet, dass**
die erste Verbindungseinrichtung (5), die ersten Lenkrollen (7a, 7b) und/oder die zweite Lenkrolle (15) zumindest indirekt mit dem Tragrahmen (3) verbunden ist bzw. sind.

3. Transportwagen nach Anspruch 1 oder 2, **dadurch gekennzeichnet, dass** die zweite Verbindungseinrichtung (251) zumindest indirekt mit dem Tragrahmen (203) verbunden ist, die erste Verbindungseinrichtung (205) und/oder die zweite Verbindungseinrichtung zumindest eine Deichsel (205) umfasst, die erste Verbindungseinrichtung (205) und/oder die zweite Verbindungeinrichtung (251) zumindest ein Verbindungselement zur Verbindung eines weiteren Transportwagens und/oder eines Zugfahrzeugs umfasst und/oder die erste Verbindungseinrichtung (205) und/oder die zweite Verbindungseinrichtung (251) im wesentlichen entlang der Längsmittelachse (L) angeordnet ist.

4. Transportwagen nach einem der vorangehenden Ansprüche, **dadurch gekennzeichnet, dass**
die ersten Lenkachsen (13a, 13b), und/oder die zweite Lenkachse (23) im wesentlichen senkrecht zu einer von dem Tragrahmen (3) aufgespannten Ebene verläuft bzw. verlaufen, die Längsmittelachse (L) in der von dem Tragrahmen (3) aufgespannten Ebene verläuft, die zweite Lenkachse (23) entlang der Längsmittelachse (L) angeordnet ist, insbesondere die Längsmittelachse (L) schneiden, und/oder die ersten Lenkachsen (13a, 13b) windschief zu der Längsmittelachse (L) verlaufen.

5. Transportwagen nach einem der vorangehenden Ansprüche, **dadurch gekennzeichnet, dass**
der Drehsinn der ersten Lenkrollen (7a, 7b) um die jeweils erste Lenkachse (13a, 13b) entgegengesetzt ist und/oder
die Lenkvorrichtung (27') zumindest eine, insbesondere zumindest teilweise getrennt von der ersten Verbindungseinrichtung (5') und/oder der zweiten Verbindungseinrichtung ausgebildete und/oder zumindest teilweise von einer der ersten Lenkrollen (7a') umfasste und/oder mit einer der ersten Lenkrollen (7a') in direkter Wirkverbindung stehende und/oder zumindest zeitweise unabhängig von der ersten Verbindungseinrichtung (5') und/oder der zweiten Verbindungseinrichtung bewegbare, insbesondere um eine, vorzugsweise im wesentlichen parallel zu den ersten Lenkachsen (13 a', 13b'), und/oder der zweiten Lenkachse verlaufende Drehachse drehbare, Handhabungsvorrichtung (33') umfasst, wobei die Drehachse vorzugsweise einer der ersten Lenkachsen (13a') entspricht.

6. Transportwagen nach einem der vorangehenden Ansprüche, **dadurch gekennzeichnet, dass**
die Handhabungsvorrichtung (133, 333) mittels der Fixiereinrichtung (139, 339) in zumindest einer Drehposition um die Drehachse und/oder die ersten Lenkrollen (107a, 107b, 307a, 307b) in zumindest einer Schwenkposition um die ersten Lenkachsen (113a, 113b, 313a, 313b) fixierbar ist bzw. sind, wobei vorzugsweise zwei Feststellpositionen, Schwenkpositionen und/oder Drehpositionen vorgesehen sind, insbesondere die zwei Feststellpositionen und/oder Drehpositionen zwei um 180° um die ersten Lenkachsen versetzt angeordnete Schwenkpositionen entsprechen.

7. Transportwagen nach einem der vorangehenden Ansprüche, **dadurch gekennzeichnet, dass**
in der Feststellposition, der Schwenkposition und/oder der Drehposition die ersten Lenkrollen (107a, 107b, 307a, 307b) in einer einer solchen Lenkposition um die jeweilige erste Lenkachse (113a, 113b) angeordnet sind, dass eine Bewegung des Transportwagens (101, 301) in Richtung der Längsmittelachse (L) und/oder Hauptfahrrichtung (F), insbesondere in Vorwärtsrichtung oder in Rückwärtsrichtung des Transportwagens (101, 301), ermöglicht ist, vorzugsweise die ersten Rollachsen (111a, 111b) parallel zu der ersten Querachse (Q), die ersten Rollachsen (111a, 111 b) parallel zueinander und/oder die ersten Rollachsen (111a, 111b) senkrecht zu der Längsmittelachse (L) ausgerichtet sind.

8. Transportwagen nach einem der vorangehenden Ansprüche, **dadurch gekennzeichnet, dass**
die Betätigungseinrichtung (563) von der Handhabungsvorrichtung (533) zumindest bereichsweise umfasst und/oder an dieser zumindest bereichsweise angeordnet ist.

9. Transportwagen nach einem der vorangehenden Ansprüche, **dadurch gekennzeichnet, dass**
die Lenkvorrichtung zumindest ein Getriebe zur Übertragung einer Bewegung der Handhabungsvorrichtung, insbesondere einer Drehbewegung der Handhabungsvorrichtung um die Drehachse, auf die ersten Lenkrollen, insbesondere zur Drehung der ersten Lenkrollen um die erste Lenkachse umfasst, wobei das Übersetzungsverhältnis des Getriebes veränderbar ist, insbesondere in Abhängigkeit von einem Umfang der Drehbewegung um die Drehachse, wobei vorzugsweise für eine Bewegung der Handhabe aus der Drehposition eine Untersetzung vorliegt.

10. Zug, umfassend eine Vielzahl von, insbesondere mittels der jeweils ersten Verbindungseinrichtung und/oder der jeweils zweiten Verbindungseinrichtung eines vorangehenden oder nachfolgenden Transportwagens, miteinander verbundenen Transportwagen nach einem der vorangehenden Ansprüche.

11. Verfahren zur Bewegung eines Transportwagens (101, 101', 201, 301, 401, 501) nach einem der Ansprüche 1 bis 10, der zumindest ein erstes Lenkrollenpaar umfasst, wobei zumindest zwei um jeweils eine erste Rollachse rotierende und mittels einer Lenkvorrichtung (127) zwangsgelenkte Lenkrollen (107a, 107b) des ersten Lenkrollenpaares entlang einer im wesentlichen senkrecht zu einer Längsmittelachse (L) des Transportwagens (101) verlaufenden ersten Querachse (Q) auf gegenüberliegenden Seiten der Längsmittelachse (L) angeordnet werden und zumindest eine zweite Lenkrolle (15) eingesetzt wird, die bezüglich der Hauptfahrrichtung (F) vor der ersten Querachse (Q) angeordnet und um eine zweite Rollachse (119) rotiert wird, wobei das Verfahren ferner die Schritte umfasst
Betätigen einer Fixiereinrichtung (139) zur Lösung einer Fixierung der Lenkvorrichtung (127), Bewegen zumindest einer Handhabungsvorrichtung (133) der Lenkvorrichtung (127) zur Verschwenkung der ersten Lenkrollen (107a, 107b) um die erste Lenkachsen (113a, 113b), so dass die ersten Rollachsen (111a, 111b) parallel zu der Hauptfahrrichtung (F) ausgerichtet werden, und
Ausüben einer Schub- und/oder Zugkraft in eine Richtung senkrecht zu der Hauptfahrrichtung (F) um die zweite Lenkrolle (115) um eine zweite Lenkachse, um die die zweite Lenkrolle (115) frei schwenkbar gelagert wird, geschwenkt wird, **dadurch gekennzeichnet, dass**
bei einer fehlenden Fixierung der Lenkvorrichtung (127) mittels der Fixiereinrichtung (139), eine Überführung einer in eine Hauptfahrrichtung (F) des Transportwagens (101) angeordneten ersten Verbindungseinrichtung (105) und/oder zumindest einer entgegen der Hauptfahrrichtung angeordneten zweiten Verbindungseinrichtung in zumindest eine Verbindung mit einem weiteren Transportwagen und/oder Zugwagen ermöglichende Verbindungsposition verhindert wird und/oder eine Lösung der Fixiereinrichtung (139) und/oder eine Bewegung der Lenkvorrichtung (127) aus zumindest einer Feststellposition heraus, nur dann möglich ist, wenn die erste Verbindungseinrichtung (105) und/oder die zweite Verbindungseinrichtung sich außerhalb der Verbindungsposition befindet bzw. befinden.

12. Verfahren nach Anspruch 11 **dadurch gekennzeichnet, dass**
die ersten Lenkrollen (107a, 107b) mittels der Lenkvorrichtung (127) drehmitnahmesicher verschwenkt werden, insbesondere in einem entgegengesetzten Drehsinn.

13. Verfahren nach Anspruch 11 oder 12, **dadurch gekennzeichnet, dass**
zum Betätigen der Fixiereinrichtung (139) die erste Verbindungseinrichtung (105) und/oder die zweite Verbindungseinrichtung, aus der Verbindungsposition heraus bewegt wird bzw. werden.

14. Verfahren nach einem der Ansprüche 11 bis 13, **dadurch gekennzeichnet, dass**
die Lenkvorrichtung (127) bei einer Fixierung in der Feststellposition fixiert wird, insbesondere die Handhabungsvorrichtung (133) in zumindest einer Drehposition und/oder die ersten Lenkrollen (107a, 107b) in zumindest einer Schwenkposition fixiert wird bzw. werden.

15. Verfahren nach Anspruch 14, **dadurch gekennzeichnet, dass**
in der Feststellposition, der Drehposition und/oder der Schwenkposition die ersten Lenkrollen in einer Lenkposition derart fixiert werden, dass die ersten Rollachsen (111a, 111b) parallel zu der ersten Querachse (Q), die ersten Rollachsen (111a, 111b) parallel zueinander und/oder die ersten Rollachsen (111a, 111b) senkrecht zu der Längsmittelachse (L) ausgerichtet werden.

16. Verfahren nach einem der Ansprüche 11 bis 15, **dadurch gekennzeichnet, dass**
wenn die Lenkvorrichtung (127) sich außerhalb der Festellposition, sich die Handhabungsvorrichtung (133) außerhalb der Drehposition und/oder die ersten Lenkrollen (107a, 107b) außerhalb der Schwenkposition befindet bzw. befinden, eine Überführung der ersten Verbindungseinrichtung (105) und/oder der zweiten Verbindungseinrichtung in die Verbindungsposition verhindert wird und/oder eine Lösung der Handhabungsvorrichtung (133) aus der Drehposition und/oder der ersten Lenkrollen (107a, 107b) aus der Schwenkposition heraus, nur dann möglich ist, wenn die erste Verbindungseinrichtung (105) und/oder die zweite Verbindungseinrichtung sich außerhalb der Verbindungsposition befindet bzw. befinden.

17. Verfahren nach einem der Ansprüche 11 bis 16, **dadurch gekennzeichnet, dass**
zur Lösung der Fixierung eine Verbindung zwischen zumindest einem mit der Lenkvorrichtung (127), der Handhabungsvorrichtung (133), dem ersten Lenkrollenpaar und/oder einem der ersten Lenkrollen (107a, 107b) in Wirkverbindung stehenden ersten Fixierelements (141) einerseits und zumindest einem mit der ersten Verbindungseinrichtung (105) und/oder der zweiten Verbindungseinrichtung und/oder zumindest einer Betätigungseinrichtung der Fixiereinrichtung (139) in Wirkverbindung stehenden zweiten Fixierelement (143) andererseits gelöst wird.

18. Verfahren nach Anspruch 17, **dadurch gekennzeichnet dass**,
eine Bewegung der ersten Verbindungseinrichtung, der zweiten Verbindungseinrichtung (105) und/oder der Betätigungseinrichtung an das zweite Fixierelement (143) übertragen wird.

## Claims

1. A transport trolley (1, 1', 1", 101, 101', 201, 301, 401, 501), comprising at least one support frame (3), at least one first connecting device (5) for connection to an additional transport trolley and/or a tractor unit arranged in a main direction of travel (F) of the transport trolley (1), at least one first pair of swivel castors (7a, 7b), wherein at least two swivel castors of the first pair of swivel castors (7a, 7b) rotating about a first roll axis (11a, 11b) respectively are arranged, along a first transverse axis (Q) extending essentially vertically to a longitudinal central axis (L) of the support frame (5) on opposite sides of the longitudinal central axis (L), and at least one second swivel castor (15) which is arranged before the first transverse axis (Q) with respect to the main direction of travel (F), wherein the second swivel castor (15) is at least one swivel castor (15) rotating about a second roll axis (19), and the first swivel castors (7a, 7b) of the first pair of swivel castors are configured as swivel castors (7a, 7b) which can be swiveled in a force-steered manner about a first steering axle (13 a, 13b) respectively and the second swivel castor (15) is configured as a swivel castor (15) which can be swiveled freely about a second steering axle (23), wherein at least one steering device (127, 327) connecting the first swivel castors of the first pair of swivel castors swivelably with one another in a rotation-proof manner comprises at least one fixing device (139, 339), by means of which the steering device (127, 327) can be fixed in at least one locking position, **characterized in that**
the fixing device (139) is in operative connection with the first connecting device (105) and/or a second connecting device of the transport trolley arranged opposite to the main direction of travel (F) such that the first connecting device (105) and/or the second connecting device can only be transferred into a connecting position facilitating the connection with an additional transport trolley and/or tractor unit, if the steering device (127) is arranged and/or fixed in the locking position, and/or a releasing of the fixing device (139) and/or a movement of the steering device (127) from the locking position is only possible, if the first connecting device (105) and/or the second connecting device is or are located outside the connecting position.

2. The transport trolley according to Claim 1, **characterized in that**
the first connecting device (5), the first swivel castors (7a, 7b) and/or the second swivel castor (15) is or are at least indirectly connected to the support frame (3).

3. The transport trolley according to Claim 1 or 2, **characterized in that** the second connecting device (251) is at least indirectly connected to the support frame (203), the first connecting device (205) and/or the second connecting device comprise(s) at least one drawbar (205), the first connecting device (205) and/or the second connecting device (251) comprise(s) at least one connecting element for connecting an additional transport trolley and/or a tractor unit and/or the first connecting device (205) and/or the second connecting device (251) is or are arranged essentially along the longitudinal central axis (L).

4. The transport trolley according to any one of the preceding claims, **characterized in that** the first steering axles (13a, 13b) and/or the second steering axle (23) extend or extends essentially vertically to a plane spanned by the support frame (3), the longitudinal central axis (L) extends in the plane spanned by the support frame (3), the second steering axle (23) is arranged along the longitudinal central axis (L), in particular intersect(s) the longitudinal central axis (L), and/or the first steering axles (13a , 13b) extend out of square to the longitudinal central axis (L).

5. The transport trolley according to any one of the preceding claims, **characterized in that**
the direction of rotation of the first swivel castors (7a, 7b) is opposed about the first steering axle (13a, 13b) respectively and/or
the steering device (27') comprises at least one handling device (33') which is configured in particular at least partially separated from the first connecting device (5') and/or the second connecting device and/or at least partially comprised by one of the first swivel castors (7a') and/or in direct operative connection with one of the first swivel castors (7a') and/or movable at least at times independently of the first connecting device (5') and/or of the second connecting device, in particular rotatable about an axis of rotation extending preferably essentially parallel to the first steering axles (13a', 13b') and/or the second steering axle, wherein the axis of rotation preferably corresponds to one of the first steering axles (13a').

6. The transport trolley according to any one of the preceding claims, **characterized in that**
the handling device (133, 333) can be fixed by means of the fixing device (139, 339) in at least one rotating position about the axis of rotation and/or the first swivel castors (107a, 107b, 307a, 307b) can be fixed in at least one swivel position about the first steering axles (113a, 113b, 313a, 313b), wherein preferably two locking positions, swivel positions and/or rotating positions are provided, in particular the two locking positions and/or rotating positions correspond to two swivel positions arranged offset by 180° about the first steering axles.

7. The transport trolley according to any one of the preceding claims, **characterized in that**
in the locking position, the swivel position and/or the rotating position the first swivel castors (107a, 107b, 307a, 307b) are arranged in such a steering position about the respective first steering axle (113a, 113b) that a movement of the transport trolley (101, 301) is made possible in the direction of the longitudinal central axis (L) and/or the main direction of travel (F), in particular in the forwards direction or in the reverse direction of the transport trolley (101, 301), preferably the first roll axles (111a, 111b) are aligned parallel to the first transverse axis (Q), the first roll axles (111a, 111b) are aligned parallel to each other and/or the first roll axles (111a, 111b) are aligned vertically to the longitudinal central axis (L).

8. The transport trolley according to any one of the preceding claims, **characterized in that**
the actuation device (563) is comprised by the handling device (533) at least in certain areas and/or is arranged at said handling device at least in certain areas.

9. The transport trolley according to any one of the preceding claims, **characterized in that**
the steering device comprises at least one gear for transferring a movement of the handling device, in particular a rotational motion of the handling device about the axis of rotation, to the first swivel castors, in particular for rotating the first swivel castors about the first steering axle, wherein the transmission ratio of the gear can be modified, in particular as a function of the extent of the rotational motion about the axis of rotation, wherein a gear reduction preferably exists for a movement of the handle from the rotational position.

10. A train, comprising a plurality of transport trolleys connected to one another in particular by means of the first connecting device respectively and/or the second connecting device respectively of a transport trolley travelling in front or behind, according to any one of the preceding claims.

11. A method for moving a transport trolley (101, 101', 201, 301, 401, 501) according to any one of Claims 1 to 10, which comprises at least one first pair of swivel castors, wherein at least two swivel castors (107a, 107b) of the first pair of swivel castors which rotate about a first roll axis respectively and which are force-steered by means of a steering device (127) are arranged along a first transverse axis (Q) extending essentially vertically to a longitudinal central axis (L) of the transport trolley (101) on opposite sides of the longitudinal central axis (L), and at least one second swivel castor (15) is used which is arranged before the first transverse axis (Q) with respect to the main direction of travel (F) and is rotated about a second roll axis (119), wherein the method further comprises the following steps
actuation of a fixing device (139) for releasing a fixing of the steering device (127), moving of at least one handling device (133) of the steering device (127) for swiveling the first swivel castors (107a, 107b) about the first steering axles (113a, 113b), so that the first roll axles (111a, 111b) are aligned parallel to the main direction of travel (F), and
exertion of a thrust and/or tractive force in a direction vertically to the main direction of travel (F) by which the second swivel castor (115) is swiveled about a second steering axle, about which the second swivel castor (115) freely swivels, **characterized in that**
if the steering device (127) is not fixed by means of the fixing device (139), a transfer of a first connecting device (105) arranged in a main direction of travel (F) of the transport trolley (101) and/or of at least a second connecting device arranged opposite the main direction of travel into at least one connecting position facilitating a connection with an additional transport trolley and/or tractor unit is prevented, and/or a releasing of the fixing device (139) and/or a movement of the steering device (127) from at least one locking position is only possible, if the first connecting device (105) and/or the second connecting device is or are located outside the connecting position.

12. The method according to Claim 11, **characterized in that**
the first swivel castors (107a, 107b) are swiveled in a rotation-proof manner by means of the steering device (127), in particular in an opposite direction of rotation.

13. The method according to Claim 11 or 12, **characterized in that** the first connecting device (105) and/or the second connecting device is or are moved out of the connecting position, in order to actuate the fixing device (139).

14. The method according to any one of Claims 11 to 13, **characterized in that** the steering device (127) in the case of a fixation is fixed in the locking position, in particular the handling device (133) is fixed in at least one rotating position and/or the first swivel castors (107a, 107b) are fixed in at least one swivel position.

15. The method according to Claim 14, **characterized in that**
in the locking position, the rotating position and/or the swivel position the first swivel castors are fixed in a steering position such that the first roll axles (111a, 111b) are aligned parallel to the first transverse axis (Q), the first roll axles (111a, 111b) are aligned parallel to each other and/or the first roll axles (111a, 111b) are aligned vertically to the longitudinal central axis (L).

16. The method according to any one of Claims 11 to 15, **characterized in that** if the steering device (127) is located outside the locking position, the handling device (133) is located outside the rotating position and/or the first swivel castors (107a, 107b) are located outside the swivel position, a transfer of the first connecting device (105) and/or the second connecting device into the connecting position is prevented, and/or a releasing of the handling device (133) from the rotating position and/or of the first swivel castors (107a, 107b) from the swivel position is only possible, if the first connecting device (105) and/or the second connecting device is or are located outside the connecting position.

17. The method according to any one of Claims 11 to 16, **characterized in that** in order to release the fixing a connection between at least one first fixing element (141) in operative connection with the steering device (127), the handling device (133), the first pair of swivel castors and/or one of the first swivel castors (107a, 107b), on the one hand, and at least one second fixing element (143) in operative connection with the first connecting device (105) and/or the second connecting device and/or at least one actuation device of the fixing device (139), on the other hand, are released.

18. The method according to Claim 17, **characterized in that**
a movement of the first connecting device, the second connecting device (105) and/or the actuation device is transferred to the second fixing element (143).

## Revendications

1. Chariot de transport (1, 1', 1", 101, 101', 201, 301, 401, 501) comprenant au moins un châssis de support (3), au moins un premier dispositif de connexion (5) agencé dans une direction de déplacement principale (F) du chariot de transport (1) pour une connexion à un chariot de transport supplémentaire et/ou à un tracteur, au moins une première paire de roues de guidage (7a, 7b), dans lequel au moins deux roues de guidage de la première paire de roues de guidage (7a, 7b) tournant chacune autour d'un premier axe de rotation (11a, 11b) sont agencées le long d'un premier axe transversal (Q) s'étendant essentiellement perpendiculairement à un axe central longitudinal (L) du châssis de support (3), sur des côtés opposés de l'axe central longitudinal (L), et au moins une seconde roue de guidage (15), qui est agencée par rapport à la direction de déplacement principale (F) en amont du premier axe transversal (Q), dans lequel la seconde roue de guidage (15) est au moins une roue de guidage (15) tourner autour d'un second axe de rotation (19), et les premières roues de guidage (7a, 7b) de la première paire de roues de guidage sont réalisées sous la forme de roues de guidage (7a, 7b) pouvant pivoter sous une contrainte forcée autour d'un premier axe de direction (13a, 13b) respectivement, et la seconde roue de guidage (15) est réalisée sous la forme d'une roue de guidage (15) pouvant pivoter librement autour d'un second axe de direction (23), dans lequel au moins un dispositif de guidage (127, 327) reliant ensemble les premières roues de guidage de la première paire de roues de guidage de manière pivotante et avec un entraînement en rotation sécurisé, comprend au moins un dispositif de fixation (139, 339), au moyen duquel le dispositif de guidage (127, 327) peut être fixé dans au moins une position d'immobilisation, **caractérisé en ce que**
le dispositif de fixation (139) est en connexion fonctionnelle avec le premier dispositif de connexion (105) et/ou un second dispositif de connexion du chariot de transport, agencé opposé à la direction de déplacement principale (F), de sorte que le premier dispositif de connexion (105) et/ou le second dispositif de connexion peuvent être amenés dans une position de connexion permettant la connexion avec un chariot de transport supplémentaire et/ou le tracteur lorsque le dispositif de guidage (127) est disposé et/ou est fixé dans la position d'immobilisation, et/ou un desserrage du dispositif de fixation (139) et/ou un déplacement du dispositif de guidage (127) en dehors de la position d'immobilisation est seulement possible lorsque le premier dispositif de connexion (105) et/ou le second dispositif de connexion se trouvent ou sont en dehors de la position de connexion.

2. Chariot de transport selon la revendication 1, **caractérisé en ce que**
le premier dispositif de connexion (5), les premières roues de guidage (7a, 7b) et/ou la seconde roue de guidage (15) est ou sont reliés au moins indirectement au châssis de support (3).

3. Chariot de transport selon la revendication 1 ou 2, **caractérisé en ce que**
le second dispositif de connexion (251) est relié au châssis de support (203), au moins indirectement, le premier dispositif de connexion (205) et/ou le second dispositif de connexion comprennent au moins un timon (205), le premier dispositif de connexion (205) et/ou le second dispositif de connexion (251) comprennent au moins un élément de connexion pour connecter un chariot de transport supplémentaire et/ou un tracteur, et/ou le premier dispositif de connexion (205) et/ou le second dispositif de connexion (251) sont agencés essentiellement le long de l'axe central longitudinal (L).

4. Chariot de transport selon l'une quelconque des revendications précédentes, **caractérisé en ce que**
les premiers axes de direction (13a, 13b), et/ou le second axe de direction (23) s'étendent essentiellement perpendiculairement à un plan défini par le châssis de support (3), l'axe central longitudinal (L) s'étend dans le plan défini par le châssis de support (3), le second axe de direction (23) est disposé le long de l'axe central longitudinal (L), en particulier recoupant l'axe central longitudinal (L), et/ou les premiers axes de direction (13a, 13b) s'étendant de travers par rapport à l'axe central longitudinal (L).

5. Chariot de transport suivant l'une quelconque des revendications précédentes, **caractérisé en ce que**
le sens de rotation des premières roues de guidage (7a, 7b) autour du premier axe de direction (13a, 13b) respectif est opposé, et/ou le dispositif de guidage (27') comprend au moins un dispositif de manipulation (33'), formé en particulier au moins partiellement séparé du premier dispositif de connexion (5') et/ou du second dispositif de connexion et/ou au moins partiellement comprenait dans l'une des premières roues de guidage (7a'), et/ou se trouvant en liaison fonctionnelle directe avec l'une des premières roues de guidage (7a'), et/ou pouvant être déplacé au moins temporairement, indépendamment du premier dispositif de connexion (5') et/ou du second dispositif de connexion, pouvant tourner en particulier autour d'un axe de rotation, s'étendant de préférence essentiellement parallèle aux premiers axes de direction (13a', 13b') et/ou au second axe de direction, dans lequel l'axe de rotation correspond de préférence à l'un des premiers axes de direction (13a').

6. Chariot de transport selon l'une quelconque des revendications précédentes, **caractérisé en ce que**
le dispositif de manipulation (133, 333) peut être fixé au moyen du dispositif de fixation (139, 339) dans au moins une position de rotation autour de l'axe de rotation et/ou les premières roues de guidage (107a, 107b, 307a, 307b) peuvent être fixées dans au moins une position de pivotement autour des premiers axes de direction (113a, 113b, 313a, 313b), dans lequel de préférence deux positions de verrouillage, positions de pivotement et/ou positions de rotation sont prévues en particulier, les deux positions de verrouillage et/ou positions de rotation correspondant à deux positions de pivotement agencées décalées de 180° autour des premiers axes de direction.

7. Chariot de transport selon l'une quelconque des revendications précédentes, **caractérisé en ce que**
dans la position de verrouillage, la position de pivotement et/ou la position de rotation, les premières roues de guidage (107a, 107b, 307a, 307b) sont disposées dans une telle position de guidage sur le premier axe de direction (113 a, 113b) respectif, qu'un déplacement du chariot de transport (101, 301) dans la direction de l'axe central longitudinal (L) et/ou la direction de déplacement principale (F), en particulier dans la direction vers l'avant ou en sens inverse du chariot de transport (101, 301), est possible, et de préférence les premiers axes de roulement (111a, 111b) sont orientés parallèlement au premier axe transversal (Q), les premiers axes de roulement (111a, 111b) sont orientés parallèles entre eux et/ou les premiers axes de roulement (111a, 111b) sont orientés perpendiculairement à l'axe central longitudinal (L).

8. Chariot de transport selon l'une quelconque des revendications précédentes, **caractérisé en ce que**
le dispositif d'actionnement (563) est compris au moins par endroits dans le dispositif de manipulation (533) et/ou est agencé au moins par endroits sur celui-ci.

9. Chariot de transport suivant l'une quelconque des revendications précédentes, **caractérisé en ce que**
le dispositif de guidage comprend au moins une boîte de vitesses pour transmettre un mouvement du dispositif de manipulation, en particulier un mouvement de rotation du dispositif de manipulation autour de l'axe de rotation sur les premières roues de guidage, en particulier pour la rotation des premières roues de guidage autour du premier axe de direction, dans lequel le rapport de transmission de la boîte de vitesses peut être modifié, en particulier en fonction d'une circonférence du mouvement de rotation autour de l'axe de rotation, dans lequel de préférence une démultiplication se produit pour un déplacement de la manipulation hors de la position de rotation.

10. Train, comprenant une pluralité de chariots de transport reliés les uns aux autres, en particulier au moyen du premier dispositif de connexion respectif et/ou du second dispositif de connexion respectif de chariots de transport qui se suivent ou se précèdent, selon l'une quelconque des revendications précédentes.

11. Procédé pour déplacer un chariot de transport (101, 101', 201, 301, 401, 501) selon l'une quelconque des revendications 1 à 10, qui comprend au moins une première paire de roues de guidage, dans lequel au moins deux roues de guidage (107a, 107b) de la première paire de roues de guidage tournant autour de chaque premier axe de direction, et guidées de manière forcée au moyen d'un dispositif de guidage (127), sont agencées le long d'un premier axe transversal (Q) s'étendant essentiellement perpendiculairement par rapport à un axe central longitudinal (L) du chariot de transport (101), sur des côtés opposés de l'axe central longitudinal (L), et au moins une seconde roue de guidage (15) est utilisée, qui est disposée en amont du premier axe transversal (Q) par rapport à la direction de déplacement principale (F), et qui tourne autour d'un second axe de roulement (119), dans lequel le procédé comprend en outre les étapes consistant à :
actionner un dispositif de fixation (139) pour détacher une fixation du dispositif de guidage (127), déplacer au moins un dispositif de manipulation (133) du dispositif de guidage (127) pour faire pivoter les premières roues de guidage (107a, 107b) autour du premier axe de direction (113a, 113b), de sorte que les premiers axes de roulement (111a, 111b) sont alignés parallèlement à la direction de déplacement principale (F), et exercer une force de poussée et/ou de traction dans une direction perpendiculaire à la direction de déplacement principale (F) pour faire pivoter la seconde roue de guidage (115) autour d'un second axe de direction autour duquel la seconde roue de guidage (115) est montée librement pivotante, **caractérisé en ce que**
en l'absence d'une fixation du dispositif de guidage (127) au moyen du dispositif de fixation (139), un transfert d'un premier dispositif de connexion (105) prévu dans une direction de déplacement principale (F) du chariot de transport (101) et/ou d'au moins un second dispositif de connexion prévu opposé à la direction de déplacement principale, jusque dans au moins une position de connexion permettant une connexion avec un chariot supplémentaire et/ou un tracteur est empêché, et/ou un détachement du dispositif de fixation (139) et/ou un déplacement du dispositif de guidage (127) à l'extérieur d'au moins une position d'immobilisation est possible uniquement lorsque le premier dispositif de connexion (105) et/ou le second dispositif de connexion se trouvent en dehors de la position de connexion.

12. Procédé selon la revendication 11, **caractérisé en ce que**
les premières roues de guidage (107a, 107b), sont pivotées sous contrainte de force au moyen du dispositif de guidage (127), en particulier dans un sens de rotation opposé.

13. Procédé selon la revendication 11 ou 12, **caractérisé en ce que** pour l'actionnement du dispositif de fixation (139), le premier dispositif de connexion (105) et/ou le second dispositif de connexion est déplacé à l'extérieur de la position de connexion.

14. Procédé selon l'une quelconque des revendications 11 à 13, **caractérisé en ce que** le dispositif de guidage (127) est fixé dans la position d'immobilisation pendant une fixation, en particulier le dispositif de manipulation (133) est fixé dans au moins une position de rotation et/ou les première roues de guidage (107a, 107b) sont fixées dans au moins une position de pivotement.

15. Procédé selon la revendication 14, **caractérisé en ce que**
dans la position d'immobilisation, la position de rotation et/ou la position de pivotement, les premières roues de guidage sont fixées dans une position de guidage, que les premiers axes de roulement (111a, 111b) sont orientés parallèlement au premier axe transversal (Q), les premiers axes de roulement (111a, 111b) sont orientées parallèles entre elles, et/ou les premiers axes de roulement (111a, 111b) sont orientés perpendiculairement à l'axe central longitudinal (L).

16. Procédé selon l'une quelconque des revendications 11 à 15, **caractérisé en ce que** lorsque le dispositif de guidage (127) est situé à l'extérieur de la position d'immobilisation, le dispositif de manipulation (133) se trouve en dehors de la position de rotation et/ou les premières roues de guidage (107a, 107b) se trouvent à l'extérieur de la position de pivotement, un transfert du premier dispositif de connexion (105) et/ou du second dispositif de connexion jusque dans la position de connexion est empêché et/ou un détachement du dispositif de manipulation (133) en dehors de la position de rotation et/ou des premières roues de guidage (107a, 107b) en dehors de la position de pivotement est uniquement possible lorsque le premier dispositif de connexion (105) et/ou le second dispositif de connexion est en dehors de la position de connexion.

17. Procédé selon l'une quelconque des revendications 11 à 16, **caractérisé en ce que** pour détacher la fixation, une connexion entre au moins un premier élément de fixation (141) en liaison fonctionnelle avec le dispositif de guidage (127), le dispositif de manipulation (133), la première paire de roues de guidage et/ou l'une des premières roues de guidage (107a, 107b), d'une part, et au moins un second élément de fixation (143) en liaison fonctionnelle au moins avec le premier dispositif de connexion (105) et/ou le second dispositif de connexion et/ou au moins un dispositif d'actionnement du dispositif de fixation (139), d'autre part, est détachée.

18. Procédé selon la revendication 17, **caractérisé en ce que**,
un déplacement du premier dispositif de connexion, du second dispositif de connexion (105) et/ou du dispositif d'actionnement est transmis au second élément de fixation (143).
